# EUROPEAN PATENT SPECIFICATION

(11) **EP 1 611 438 B1**
(45) Date of publication and mention of the grant of the patent: **27.08.2008**
(21) Application number: 03769635.8
(22) Date of filing: 23.10.2003
(51) Int. Cl.: G01N 27/90, G01B 7/00

(54) **METHOD AND APPARATUS FOR INSPECTING A TUBULAR**
VERFAHREN UND VORRICHTUNG ZUR INSPEKTION EINES ROHRES
PROCEDE ET DISPOSITIF D'INSPECTION D'ELEMENT TUBULAIRE

(30) Priority: 01.04.2003 US 404913
(43) Date of publication of application: 04.01.2006
(73) Proprietor: Varco I/P, Inc., Houston TX 77042-4200 (US)
(72) Inventor: KAMMANN, Reinhold, 29342 Wienhausen (DE); LAM, Clive, Chemo, Tomball, TX 77375 (US); JANSSEN, Matthias, Detlef, 29336 Nienhagen (DE); KNAPWOST, Helmut, Wolfgang, 29336 Nienhagen (DE); WORMS, Manfred, Hermann, 29336 Nienhagen (DE); DOBBERSTEIN, Bernd, Helmut, 31303 Burgdorf (DE)
(74) Representative: Lucas, Phillip Brian
(86) International application number: PCT/GB2003/004575
(87) International publication number: WO 2004/088301

(56) References cited:
- EP-A- 0 260 355
- WO-A-02/068948
- FR-A- 2 018 637
- US-A- 5 565 633

## Description

The present invention relates to a method of inspecting a tubular, an apparatus for inspecting a tubular, and to a method of calibrating such an apparatus.

A wide variety of tubulars are used in the oil and gas industry. One particular tubular is known in the art as a "drilling riser". A drilling riser usually comprises hollow main body constructed of steel of a relatively large diameter around the outside of which are supported several auxiliary tubulars of smaller diameter. Between the smaller diameter tubulars a number of floatation devices are supported along the length of the riser. Typically a string of drilling risers is connected between a sub-sea blow-out prevention stack of a wellhead on the sea floor and a floating surface rig. In use the main body accommodates a drill string by means of which a wellbore may be drilled. The annulus between the main body and the drill string is used to return drilling mud back to the surface for recycling. The auxiliary tubulars can be used as choke and kill lines to control the flow of fluid from the well, whilst the floatation devices help to increase the buoyancy of the drilling risers to reduce weight.

During the drilling operation the drill string does not always stay centralised in the string of drilling risers. Sometimes the drill string contacts the inner surface of one or more parts of the string of drilling risers. In this event the inner surface can become damaged and/or worn. Damage to any tubular used in the oil and gas industry can reduce the mechanical integrity of the tubular, and in the event that the tubular fails, can lead to well down time, that is very expensive to repair. In some circumstances, tubular failure can lead to complete loss of the well.

Damage to tubulars can also be caused by a wide variety of other factors, for example mishandling resulting in dents and ovality, and corrosion by acid stimulation procedures.

It is apparent that tubulars need to be regularly inspected to ensure that their mechanical integrity has not been impaired by damage. After use drilling risers are inspected for damage before being used on another well. They may be sorted, repaired or discarded according to the level of damage. The wall thickness of drilling risers is usually between about 12.7mm (0.5") and 19.1mm (0.75"). If approximately 15% of the wall thickness is lost in a worn area, the drilling riser may need to be discarded.

However, inspection of drilling risers is not straightforward. As mentioned above the outside of each drilling riser is substantially hidden by the smaller tubulars and floatation devices. It is not practical or economically viable to remove these items from the main body of the riser for inspection purposes. A small part of the main body is visible at each end and this can be inspected. Inside the main body inspection has been carried out visually and by passing a video camera through the riser. Clearly such methods are not rigorous and uniform in application.

Thus it is an aim of at least preferred embodiments of the present invention to improve the accuracy of inspection of tubulars such as drilling risers.

Furthermore the nature of the defects in the drilling risers, in particular internal surface wear or corrosion, means that a contact inspection method is not always practical. Thus it is a further aim to provide a method and apparatus for inspecting tubulars such as drilling risers that does not rely upon contact between the tubular and the inspection means.

EP-A-0 260 355 discloses an apparatus for resolving the depth of each of three or more closely spaced flaws in a pipe. The apparatus comprises a single primary coil for providing a magnetic field parallel to the axis of the pipe and a number of secondary coils surrounding the primary coil also with their axes parallel to the axis of the pipe. The secondary coils measure a parallel component of magnetic flux leakage from the surface of the pipe which enables the depth of each closely spaced flaw to be determined.

US-A-5 565 633 discloses a spiral pig apparatus for detecting cracks in pipelines. The pig apparatus is provided with two sections, each section having wheels disposed at a rolling angle relative to the pipe axis. A number of magnets and sensors are mounted on the body of the pig to detect magnetic flux leaking from cracks in the pipeline. In use, the rolling angle of the wheels causes the pig apparatus to rotate whilst moving axially along the pipe for inspection of the same.

FR-A-2 018 637 discloses an apparatus for inspecting a string of tubulars. The apparatus is provided with a single coil for generating a magnetic field parallel to the axis of the pipe. A plurality of detecting shoes is urged outwardly into contact with the surface of the pipe for detecting and magnetic flux leaking therefrom.

WO 02/068948 discloses a method and system for implementing magnetostrictive sensor techniques for the non-destructive evaluation of pipeline structures. Magnetostrictive sensors are attached to an in-line inspection vehicle by way of mechanical arms on opposing sides of the vehicle. The mechanical arms are spring loaded and are equipped with rollers which maintain the sensors at approximately constant distances from the inside diameter of the pipe wall. Pulses of shear horizontal waves of frequencies less than 200kHz are generated by the transmitting magnetostrictive sensor and propagate in both directions around the circumference of the pipe wall from a point adjacent the transmitting sensor. Both waves are thereafter received at the receiving sensor spaced 180 degrees apart from the transmitting sensor.

According to the present invention there is provided a non-contact method of inspecting a tubular for defects, said tubular comprising an electrically and/or magnetically conductive material, which method comprises the steps of : -
(1) maintaining a plurality of non-contact measuring means in a substantially fixed frame of reference substantially independent of said tubular;
(2) taking a measurement representative of a distance between each of said plurality of non-contact measuring means and a surface of part of a tubular, each measurement taken by:
   (a) providing a magnetic field adjacent the part of the tubular to be inspected, the magnetic field passing into, through and out of said part; and
   (b) taking a measurement representative of the amount of magnetic flux of said magnetic field adjacent said part;
(3) generating an output electrical signal representative of said measurement, a change in the shape of one part of the tubular being manifested in a corresponding change in the amount of magnetic flux coupled by that part, whereby said electrical output signal is caused to vary in accordance with the shape of the tubular; and
(4) repeating step (2) at different parts of the tubular, variations in the distance measurements being representative of a change in shape of said surface, whereby the location of defects is facilitated;
characterised by the steps of effecting simultaneous radial adjustment of said plurality of non-contact measuring means to a predetermined distance from the surface of said tubular prior to inspection, generating said magnetic field using a plurality of active coils and supplying a substantially synchronous driving voltage to each active coil whereby interference between said non-contact measuring means is inhibited such that each of said plurality of non-contact measuring means may perform step (2) substantially simultaneously, and in that step (b) is performed in a region where said magnetic field has a dominant component of direction. One advantage of this method is that contact with the tubular is not necessary for inspection, allowing faster, more accurate and more reliable inspection. The measurement representative of distance may be an average distance over a given surface area of the tubular, e.g. over 1.0 inch². In this way the surface of the tubular may quickly inspected for large scale defects e.g. about 25.4mm by 25.4mm (1.0" by 1.0") or bigger.

Further steps are set out in claims 2 to 22 to which attention is hereby directed.

In one embodiment an active coil driven by a driving voltage generates a time-varying magnetic field. This varying magnetic field induces a voltage in at least one passive coil, the magnitude of the induced voltage being dependent on the distance between the active coil and the surface of the tubular. Preferably the tubular comprises a ferromagnetic material, such as steel. In this way, the tubular acts to couple the magnetic field between the active coil and the at least one passive coil, the amount of coupling is dependent on the distance between the active coil and a surface of the tubular. If the coils are sensitive enough, the invention may in principle be applicable to products comprising diamagnetic, paramagnetic and ferromagnetic materials e.g. ferrites.

In one embodiment, each coil has no ferromagnetic core.

The active coil may be driven by a time-varying driving voltage. This has the advantage that a voltage is induced in the passive coils substantially continuously whereby a signal representative of the distance between the non-contact measuring means and the tubular can also be obtained substantially continuously. In one embodiment time-varying voltage is sinusoidal and has a frequency of between about 20Hz and 20kHz, with 2kHz producing good results on low carbon steel.

According to another aspect of the present invention there is provided an apparatus for inspecting a tubular comprising an electrically and/or magnetically conductive material, which apparatus comprises a body having a plurality of non-contact measuring means mounted thereon in a substantially fixed frame of reference relative to the body, a centralising mechanism for maintaining the apparatus in a substantially fixed frame of reference substantially independent of the tubular being inspected, the arrangement being such that, in use, each of said plurality of non-contact measuring means can take a measurement representative of a distance between the non-contact measuring means and a respective surface of part of a tubular, a variation in the shape of the tubular corresponding to a movement of said part in the frame of reference, and generate an electrical output signal representative thereof, wherein said distance measurement is obtained by using a magnetic field that passes into, through and out of said part, and taking a measurement representative of the amount of magnetic flux of said magnetic field adjacent said part, a change in the shape of one part of the tubular being manifested in a corresponding change in the amount of magnetic flux coupled by that part, whereby said electrical output signal is caused to vary in accordance with the shape of the tubular to facilitate location of defects,
characterised in that said apparatus comprises an adjustment mechanism for effecting simultaneous radial adjustment of said plurality of non-contact measuring means to a predetermined distance from the surface of said tubular prior to inspection, and in that each of said plurality of non-contact measuring means comprises an active coil for generating said magnetic field with a dominant component of direction substantially perpendicular to a tangent to said part, and by driving means for supplying a substantially synchronous driving voltage to each of said plurality of non-contact measuring means, whereby interference between the non-contact measuring means is inhibited such that measurements representative of the distance between each of said plurality of non-contact measuring means (158) and said tubular may be carried out substantially simultaneously.

Further features are set out in claims 24 to 52 to which attention is hereby directed.

According to another aspect of the present invention there is provided a method of calibrating an apparatus as set out above, which method comprises the steps of: -
(a) placing the apparatus adjacent a section of a tubular that is known to be substantially circular in cross-section and of substantially uniform wall thickness;
(b) adjusting said plurality of non-contact measuring means to a first known distance from a surface of said section;
(c) taking said measurement for each of said plurality of non-contact measuring means; and
(d) repeating steps (a) to (c) at at least one other known distance from said pipe different to said first known distance;
whereby a non-linear variation in output from the non-contact measuring means between the known distances may be estimated electronically, and outputs representative of measurements taken between said known distances may be electronically interpreted and assigned a value on a linear scale corresponding to a distance. In this way the non-contact measuring means can be calibrated for tubulars of different diameters, different thicknesses and different materials.

Further steps of the method are set out in claims 54 and 55 to which attention is hereby directed.

For a better understanding of the present invention reference will now be made, by way of example, to the accompanying drawings in which:-
Fig. 1 is a schematic perspective view of one end of a drilling riser, with an apparatus in accordance with the present invention accommodated therein;
Fig. 2 is a schematic side view of an apparatus in accordance with the present invention in use with a tubular shown in cross section, some of the sensors and other parts of the apparatus having been omitted for clarity;
Fig. 3 is a schematic perspective view of the apparatus of Fig. 2, parts of which are omitted for clarity;
Fig. 4 is a schematic side view of the apparatus of Fig. 3;
Fig. 5A is a schematic end view of a first centraliser mechanism of the apparatus of Figs. 2 to 4 in use with a tubular;
Fig. 5B is a schematic view from within the apparatus of a second centraliser mechanism of the apparatus of Figs. 2 to 4 in use with a tubular;
Fig. 6 is a schematic end view of the centraliser mechanism of Fig. 5B in an expanded position;
Fig. 7 is a schematic cross section on line VII-VII of Fig. 4, with parts in background omitted for clarity;
Fig. 8 is a schematic side cross section through a sensor of the apparatus of Figs. 2 to 7, with part of the coil windings shown in detail in Fig. 8A;
Fig. 9 is a schematic side view of a sensor of the apparatus of Figs. 2 to 7 in use inspecting a tubular having a worn portion on an internal surface;
Fig. 10 is a schematic side view of the coils in one sensor of the apparatus of Figs. 2 to 7 in use to illustrate the principle of operation of the invention;
Fig. 11A is a top plan view of a sensor mounting mechanism used on the apparatus of Figs. 2 to 7;
Fig. 11B is a side view of the mounting mechanism of Fig. 11A;
Fig. 12 is a schematic view of an electronic signal and drive control mechanism of the apparatus of Figs. 2 to 7;
Fig. 13 is a schematic circuit diagram of a signal generation stage of the electronic signal mechanism of Fig. 12, and a signal amplification stage for a first group of six sensors of the apparatus of Figs. 2 to 7;
Fig. 14 is a schematic circuit diagram of a signal amplification stage for a second group of six sensors of the apparatus of Figs. 2 to 7;
Fig. 15 is a schematic circuit diagram of output signal conditioning electronics for one sensor of the apparatus of Figs. 2 to 7;
Fig. 16 is a calibration graph for six sensors of the apparatus of Figs. 2 to 6; and
Figs. 17 to 20 are example output traces of percentage of maximum voltage range (y-axis) against longitudinal position along the tubular (x-axis).

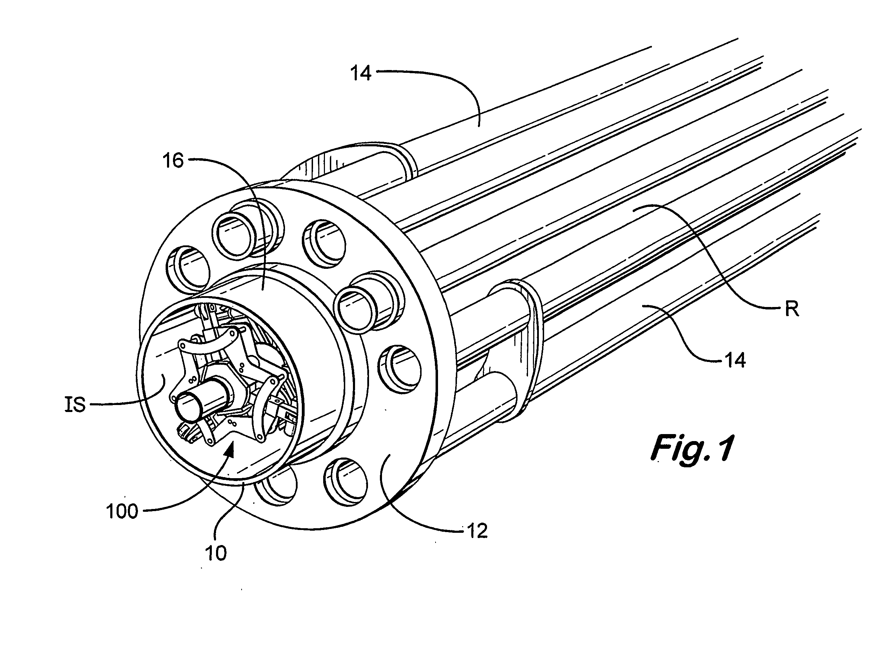

Referring to Fig. 1 a drilling riser generally identified by reference numeral R comprises a hollow cylindrical main body 10 constructed from low carbon steel (generally steel with less than 0.15% carbon). The main body is usually made in a variety of internal diameters, typically 0.46m (18") to 0. 61m (24"), although smaller and larger diameters are not unknown, and is of between about 15.2m (50ft) and 22.9m (75ft) in length. The thickness of the wall of the main body 10 is usually between about 12.7mm (0.5") and 19mm (0.75"). Supported on a flange 12, various auxiliary tubulars 14 surround the drilling riser R and extend substantially along its length (not shown). Other flanges, similar to flange 12, are spaced along the length of the riser R to support the auxiliary tubulars 14 and hold the same in position relative to the main body 10. A small portion 16 (only one shown) at either end of the main body 10 is not obstructed by the auxiliary tubulars 14.

Not shown in Fig. 1 are the flotation devices that substantially surround the circumference of the drilling riser R and extend substantially along its length.

In use, a string of such drilling risers is connected between a sub-sea blow-out prevention (BOP) stack to a floating surface rig. The buoyancy of the drilling risers is increased by the aforementioned flotation devices. A drill string is then inserted through the main body 10 of the drilling riser R and rotated to drill a well. Drilling mud is pumped down the drill string to lubricate and cool the drill bit, and to carry away cuttings. The cuttings and drilling mud return in the annulus between the drill string and the string of drilling risers to the surface. The auxiliary tubulars 14 are typically used as choke and kill lines to control the flow of fluid out of the well.

The position of the drill string is not fixed relative to the string of drilling risers. Thus during a drilling operation, the larger diameter portions of the rotating drill string often come into contact with the inner surface of the drilling risers. This can result in an area of reduced wall thickness. Sometimes the area extends circumferentially around the inner surface of a drilling riser R. Additionally or alternatively, the worn area can extend longitudinally of a drilling riser R, which is caused when the drill string is being moved longitudinally relative to the string of drilling risers.

Thus after just one drilling operation the inner surface of each drilling riser may have been damaged. Accordingly it is important that the drilling risers are inspected periodically to check their mechanical integrity, as it can be extremely costly and time consuming it to repair a string in which a drilling riser has failed. At present drilling risers are usually shipped back to shore where they are stacked horizontally and each individually inspected for damage. An apparatus 100 in accordance with the present invention is shown having been inserted into the drilling riser R for such inspection purposes.

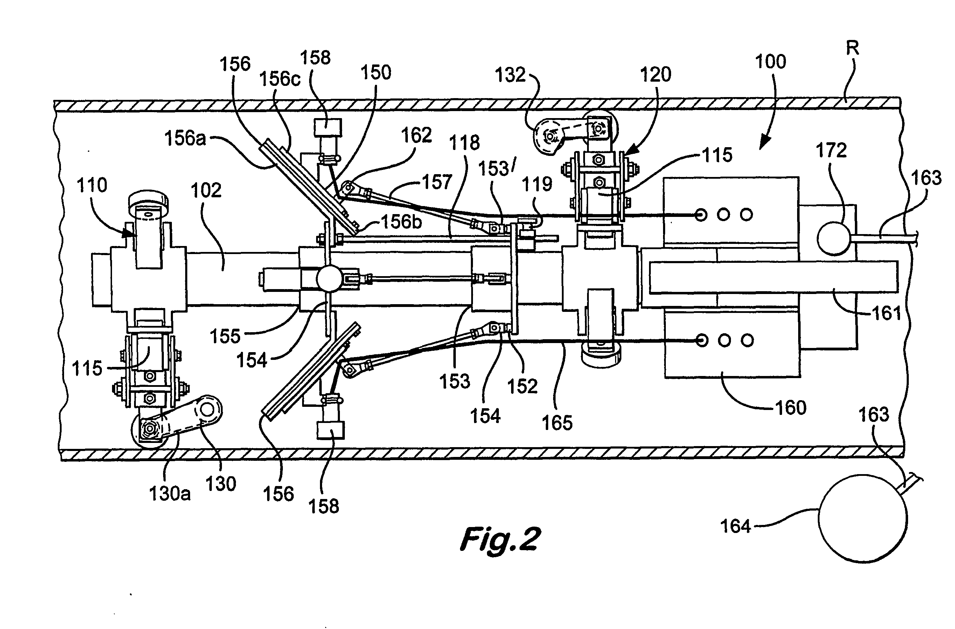

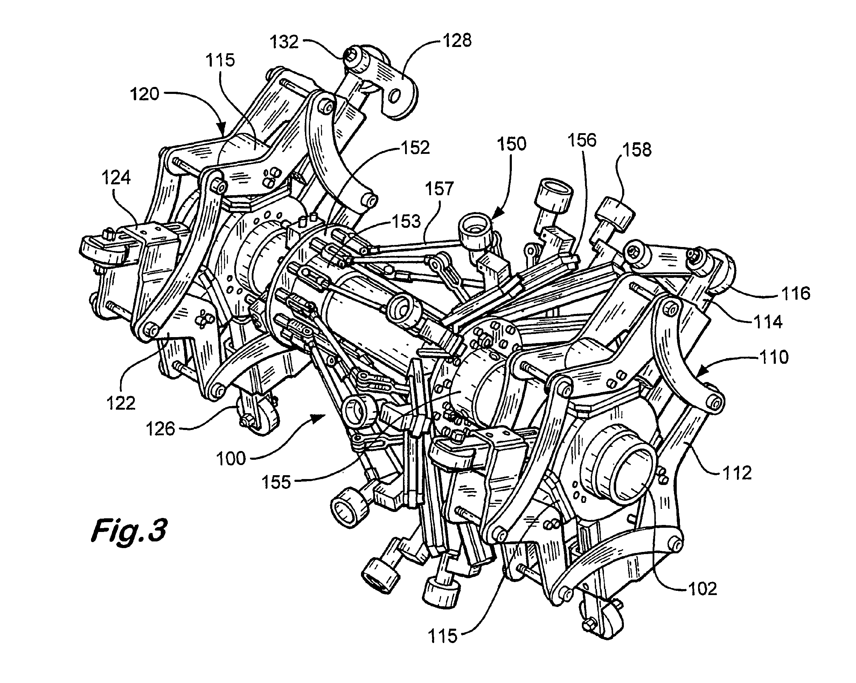

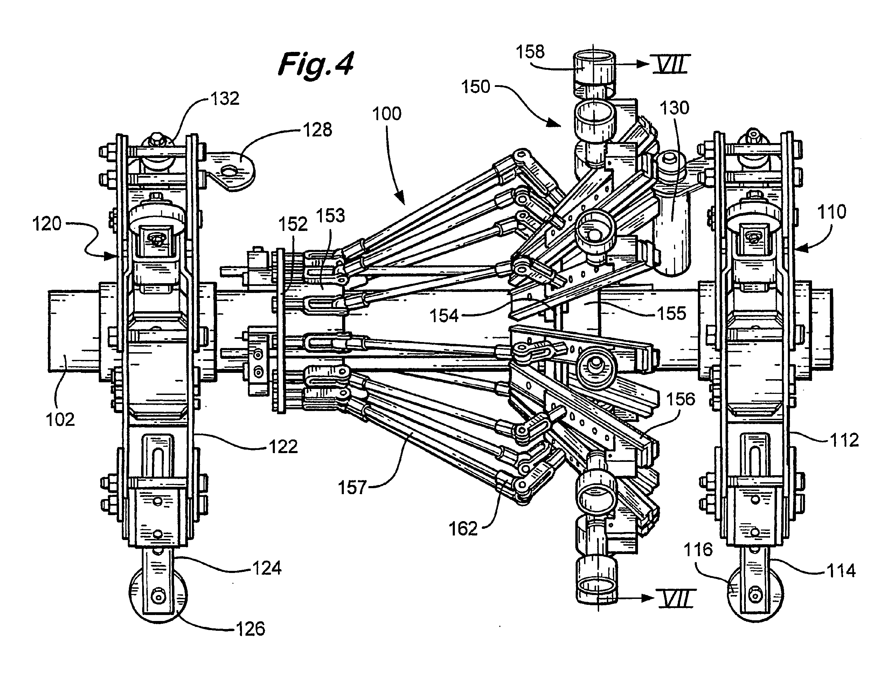

Referring to Figs. 2 to 4 an apparatus 100 generally identified by reference numeral 100 comprises an aluminium hollow main shaft 102 to which are secured two centralizer mechanisms 110 and 120 respectively, between which is a sensing mechanism 150, and at one end of the apparatus 100 is an electronic signal and drive control mechanism 160. The apparatus 100 has an overall length of 1.1m and a diameter that varies between 0.44m and 0.6m according to the diameter of the riser under inspection. The apparatus 100 weighs about 30kg.

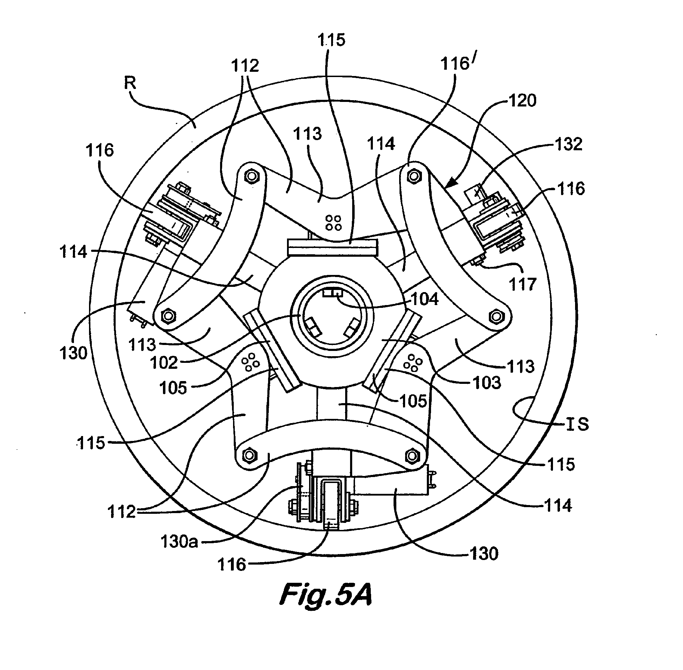

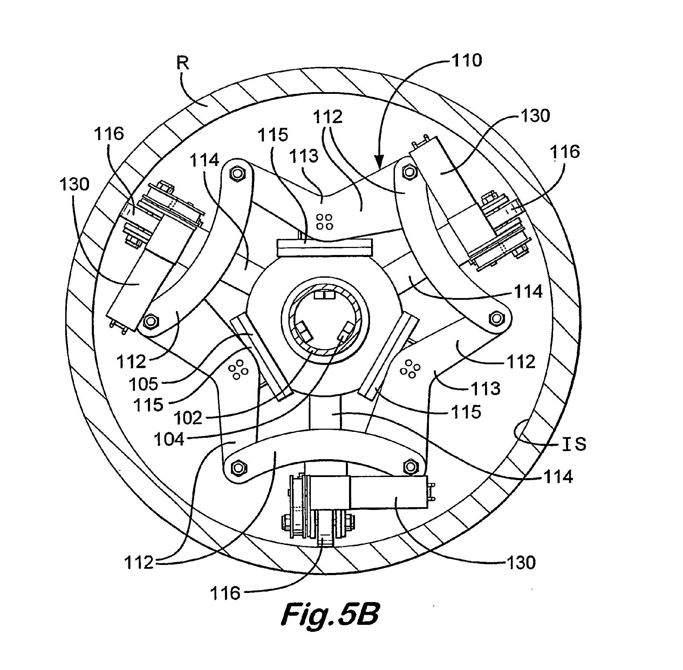

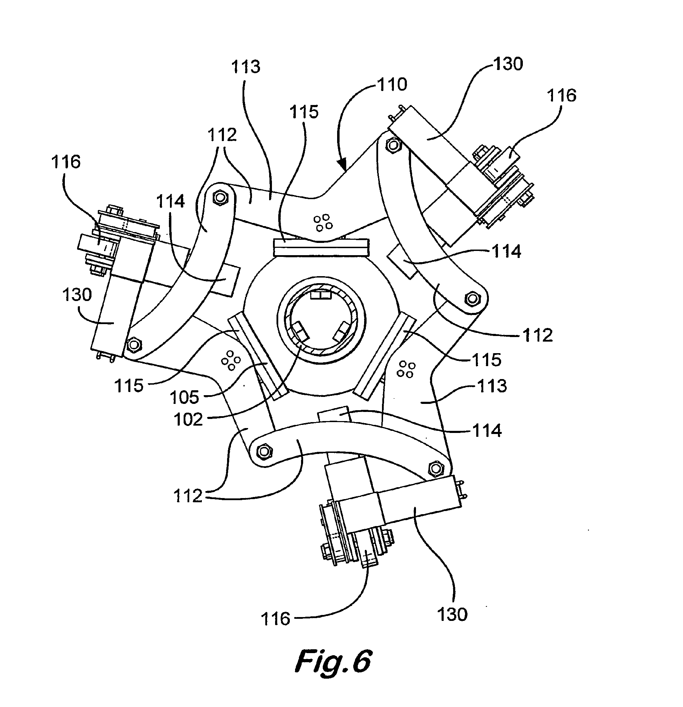

Referring to Figs. 5A, 5B and 6 the centralizing mechanisms 110 and 120 are shown in greater detail. Each centralizing mechanism 110 and 120 comprises a mounting sleeve 103 constructed from aluminium that has a central hollow cylindrical body adapted to slide over and be secured to the hollow body 102 by means of nuts and bolts 104, and two annular discs spaced apart on the hollow cylindrical body with their planes substantially perpendicular to the longitudinal axis of the hollow body 102. Three spacing plates 105 are each bolted to bridge the two annular discs and are spaced at 120° intervals therearound. An adjustable torsion spring 115 is bolted to the outward-facing surface of each spacing plate 105. Each torsion spring 115 is manufactured by Rosta AG, Switzerland (www.rosta.ch) under part number DK-A 18x50.

The centralizer 110 further comprises an aluminium cage 112 having three pairs of generally V-shaped arms 113 equi-circumferentially spaced around the mounting bracket 103, each pair being pivotably mounted at the centre of the 'V' on either side of the torsion springs 115 (see Figs. 2 to 4). The V-shaped arms 113 are mounted such that the base of the 'V' is radially inward of the top of the 'V'. A pair of arcuate arms 116' is pivotably mounted between the top of one side of one pair of V-shaped arms 113 and the top of another side of another pair of V-shaped arms, such that the cage 112 of each centralizing mechanism 110 and 120 are each formed from alternating pairs of V-shaped arms 113 and arcuate arms 116'. The cage 112 is pivotable about nine points, three of which are fixed relative to the hollow body 102.

Each V-shaped arm 113 is provided at one end of the 'V' with a mount to which is bolted a roller mount 114. Each roller mount 114 substantially bisects the 120° angle between each spacing plate 105. The roller mount 114 comprises body having an elongate slot whereby the roller mount 114 may be moved radially inwardly and outwardly by loosening of a retaining nut and bolt 117, and then held in position by tightening of the same. A roller 116 is rotatably mounted at the outward radial extremity of each end of roller mount 114. Two of the roller mounts 114 also comprise a respective electric motor 130 that is coupled to a driving belt 130a, which is in turn coupled to a gear mounted on an axle that also supports each roller 116, thereby providing a means to drive the two rollers 116. The remaining roller 116 is connected to an incremental linear encoder 132 that enables the position of the apparatus 100 within the riser R to be recorded. The linear encoder 132 is driven by the roller 116 by means of a toothed belt. The linear encoder 132 generates electrical pulses for a given number of revolutions of the roller 116 that corresponds to a known distance.

Each torsion spring 115 is adjusted to provide a continuous torsion force to the V-shaped arms 113. Furthermore the rotational sense of each torsion spring is the same. For example, in the end view of the centralizer mechanism 120 of Fig. 5A, the rotational sense of each torsion spring 115 is anti-clockwise. This causes the end of each V-shaped arm 113 having the roller mount 114 to be biased radially outwardly and the opposite end to be biased inwardly. By virtue of the interlink made by the arcuate arms 116', the three pairs of V-shaped arms operate in unison such that the rollers 116 lie on substantially the same circumference at any one time.

Fig. 5B shows the centralizing mechanism 110 in detail and in a contracted position in a drilling riser. The centralizing mechanism 110 is generally similar to the centralizing mechanism 120 with like numerals indicating like parts. The main differences are that the centralizing mechanism 120 comprises three electric motors 130, rather than two, and that the rollers 116 of each centralizing mechanism are displaced 60° relative to the other so that a roller of one centralizer substantially bisects the angle between two adjacent rollers of the other centralizer. The rotational sense of the torsion springs 115 of the centralizing mechanism 120 is the same as the centralizing mechanism 110 i.e. viewed from one end of the apparatus 100 the V-shaped arms of the two centralizing mechanisms rotate in the same sense. The applicant has found that if they rotate in opposite senses a large torsion force is applied to the hollow shaft 102 that is undesirable.

Fig. 6 shows the centralizing mechanism 110 in an extended position outside a riser. The V-shaped arms 113 have been rotated about their respective pivot points under bias of the torsion springs 115 until the torsion springs reach their equilibrium position. As a result the roller mounts 114 and rollers 116 are moved radially outwardly. The longitudinal axis of the roller mounts 114 are also rotated by about 15° about an axis perpendicular thereto. Movement of the rollers 116 and roller mounts 114 radially inwardly from the position in Fig. 6 puts the torsion springs under the correct tension to provide the right bias on a riser of diameter shown in Fig. 5B. To ensure that the centralizing mechanisms 110 and 120 have the same bias on risers of different diameters, it is necessary to adjust the position of the roller mounts 114 relative to the V-shaped arms. This is achieved by compressing the roller mounts 114 against the spring force of the torsion springs 115 such that the longitudinal axis of each roller mount 114 rotates through about 15° from the expanded position in Fig. 6 to the position shown in Fig. 5B in position to test a riser R.

In use, the outward bias applied to the roller mounts 114 causes the rollers to be urged against the inner surface of the riser R. Furthermore the linkage between each roller mount provided by the cage 112 ensures that the roller mounts 114 are not independently movable. Thus the outward bias force and the linkage mechanism of the cage 112 provide a function to automatically centralize the hollow tubular 102 with the longitudinal axis of the riser R.

The electric motors 130 provide driving power to the rollers 116 to move the apparatus 100 through the riser R. Should a roller encounter a portion of increased wall thickness or a perceived increase (e.g. where the riser is not circular in cross section), the roller 116 on or near the shortest axis of the riser R is forced inwards. However, to move radially inwards it must overcome the force of all three torsion springs that are applying an outward bias. This is because other two rollers 116 are not being urged inwardly by the change in shape of the riser R, and may even be trying to expand if on or near the longest axis of the riser R. Thus the centralizing mechanism 110 or 120 may move slightly away from the longitudinal axis of the riser R.

Should a roller encounter a portion of decreased wall thickness (e.g. where drill pipe has contacted and worn the inner surface of the riser) or a perceived decrease (e.g. where the riser is not circular in cross section), that roller 116 is urged outwardly by the torsion springs 115. This may cause a slight shift of the longitudinal axis of the apparatus 100 away from the centre of riser.

However, once the roller passes beyond a raised or worn portion the centralizing mechanisms 110 and 120 will automatically centralize the apparatus in the riser again. Furthermore the rotational displacement of the rollers between the two centralizing mechanisms helps to reduce the chance of two or more rollers 116 passing over the same portion of reduced wall thickness.

However, the applicant has found that the chances of both centralizing mechanisms 110 and 120 moving off-centre at the same time is very small. Usually only one may move slightly off-centre resulting in a twisting action of the apparatus 100 about an axis perpendicular to the longitudinal axis of the riser R. To reduce the effect of this, the sensing mechanism 150 is located approximately mid-way between the two centralizing mechanisms 110 and 120.

Referring again to Figs. 2 to 4 and Fig. 7 the sensing system 150 comprises a sleeve 153 slidably mounted on the hollow body 102. The sleeve 153 is provided with an annular mounting disc 152 to which are secured twelve mounting brackets 153' equi-circumferentially spaced around the mounting disc 152 at 30° intervals. The mounting disc 152 is further provided with three holes (not shown) for receiving three guide rods 118. Three clamping nuts 119 are mounted on the annular disc 152 for releasably fixing the sleeve 152 to the three guide rods 118.

Spaced along the hollow body 102 from the sleeve 153 is a further sleeve 155 that is bolted to the hollow body 102 and therefore fixed with respect thereto. The sleeve 155 comprises an annular mounting disc 154 to which are bolted twelve runner mounts 156 at 30° intervals around the mounting disc 154. The mounting disc 154 is further provided with three holes for receiving the three guide rods 118. The guide rods 118 are bolted to the mounting disc 154. Each runner mount 156 comprises a bracket 156a that is formed from a strip of aluminium with a 135° bend near one end. The bracket 156a is bolted to the mounting disc 154 such that it projects forwardly and radially outwardly at an angle of 45° from the axis of the hollow body 102. Bolted to each bracket 156a is a runner 156b that accommodates a slide 156c that is free to move up and down the bracket 156a guided by the runner 156b.

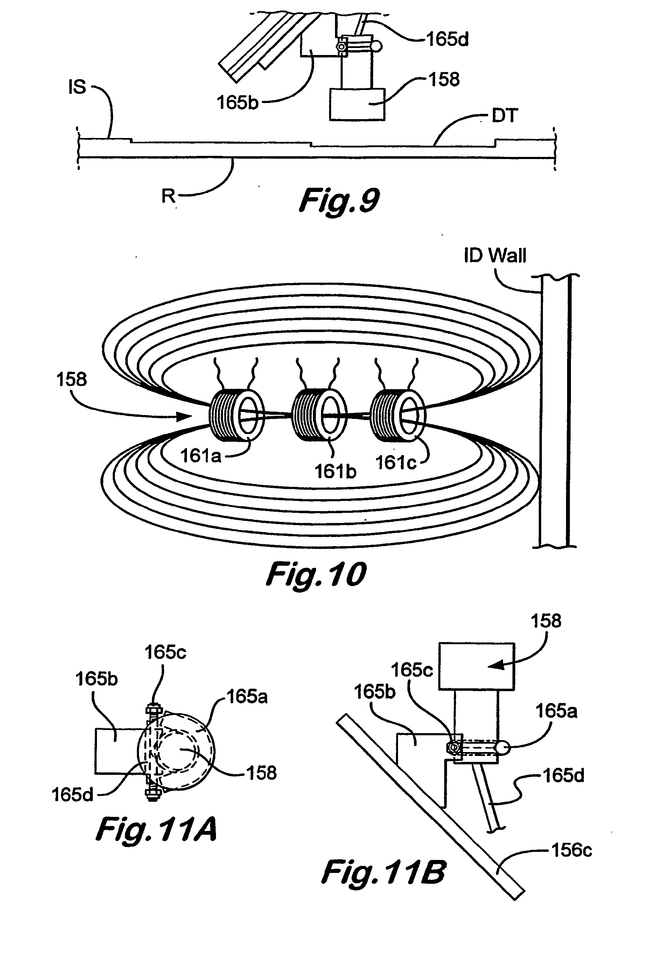

Referring to Figs. 11A and 11B each slide 156c comprises an aluminium plate to which is secured a sensor mount 165b. The sensor mount 165b has a bolt 165c passing therethrough that secures two ends of a spring 165a between the two ends of the bolt. The spring 165a is longer than the bolt 165c such that it forms an arcuate shape between the two ends of the bolt 165c. The sensor mount 165b also comprises an arcuate recess opposite the spring for receiving a sensor 158. The sensor 158 has a base portion of cylindrical profile that is held between the spring 165a, which conforms along its length to part of the shape of the sensor 158, and the sensor mount 165b such that the longitudinal axis of the sensor 158 is oriented substantially perpendicular to the axis of the hollow body 102. The slide 156c further comprises a mounting bracket 162.

An arm 157 is pivotably mounted at both ends between each opposing pairs of mounting brackets 153' and 162 and provides a connection between the slidable sleeve 153 and the sleeve 155 that is fixed to the hollow body 102. There are twelve rigid arms 157 spaced at 30° intervals around the hollow body 102.

In this way the sensing system 150 maintains the twelve sensors 158 equi-circumferentially spaced around the hollow body 102 and substantially on a common circle.

In use, the sensing system 150 provides a means for adjusting the apparatus 100 to work on risers R of differing diameters. To do this, the clamping nuts 119 are released. This permits the sleeve 153 to move relative to the hollow body 102, guided by the three guide rods 118 which inhibit rotation of the sleeve 153 around the hollow body 102. Referring to Fig. 2, if the sleeve 153 is urged leftwards the rigid arms 157 push on their respective mounting brackets 162 on the slide 156c, and push the slide 156c up the runner 156b as the sleeve 155 remains fixed in position relative to the hollow body 102. It will be recalled that the runner forms an angle of 45° with the longitudinal axis of the pipe. Accordingly, movement in this fashion pushes the sensors 158 up the runners 156b and radially outwardly to an extended position. Movement of the sleeve 153 to the right in Fig. 2 moves the sensors 158 radially inwardly to a contracted position. As each sensor is mounted on a similar mechanism and because each mechanism is attached to the same to sleeves 153 and 155, all twelve sensors are subjected simultaneously to the same amount of radial adjustment (and thereby overall diameter between opposing sensors) by one movement of the sleeve 153. Furthermore the use of runners 156b ensures that the orientation of the sensors is not changed during adjustment i.e. each longitudinal axis remains substantially in alignment with a radius of the riser to be inspected. Once the sensors are in the correct position they can be held in position by tightening of the clamping nuts 119. This makes for quick and easy adjustment of the apparatus 100 for use on risers R of differing diameters.

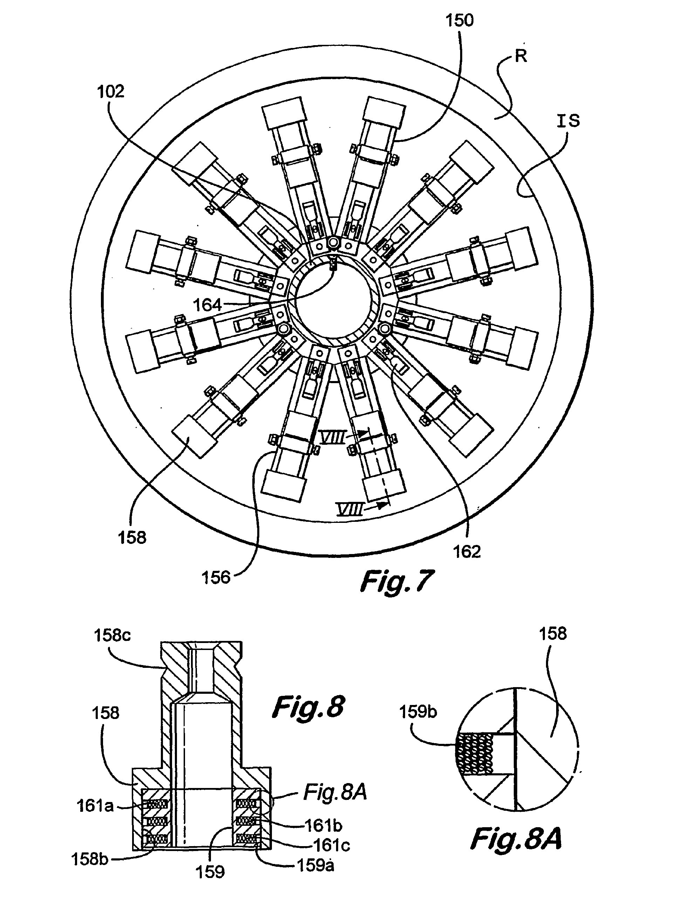

Referring to Figs. 8 and 8A one of the sensors 158 is shown in greater detail. It comprises a housing 158a having a cylindrical base portion of 20mm diameter and 35mm length, and a top cylindrical portion of 35mm diameter and 22mm length. The cylindrical base portion has a recess 158c that accommodates and helps to retain the spring 165a (Fig. 11A and 11B). The top portion has a recess 158b of 30.5mm diameter and 16.5mm depth for accommodating a coil mount 159. The coil mount 159 is constructed from plastics material and has a diameter of 30mm and a length of 16mm. The front faces of three grooves 159a are located 1mm, 6mm and 11mm from the front face of the coil mount 159 respectively, and each groove is 2mm in width. Thus each groove 159a is separated from an adjacent groove by a distance of 3mm. Each groove 159a accommodates an identical coil 161a, 161b, 161c each of which is wound from copper wire of 0.13mm diameter and comprises 400 turns. Each coil is 8.5mm in inner radius, 14mm in outer radius and 2mm in length. Coils 161a, 161b, 161c are each wound carefully so that each winding is adjacent and abuts another to form a layer across the width of the groove 159a, and each layer is offset with respect to the layer above and below such that each turn of wire is accommodated substantially in the interstice between two wires of an adjacent layer as shown in Fig. 8A. It is to be noted that the coils 159b do not have a core of an electrically and/or magentisable material.

In use the central (active) coil is driven by a sinusoidal signal from the electronic signal and drive control mechanism 160. As shown in Fig. 10, this generates a time-varying magnetic field around the active coil that is of sufficient size to intersect the riser R.

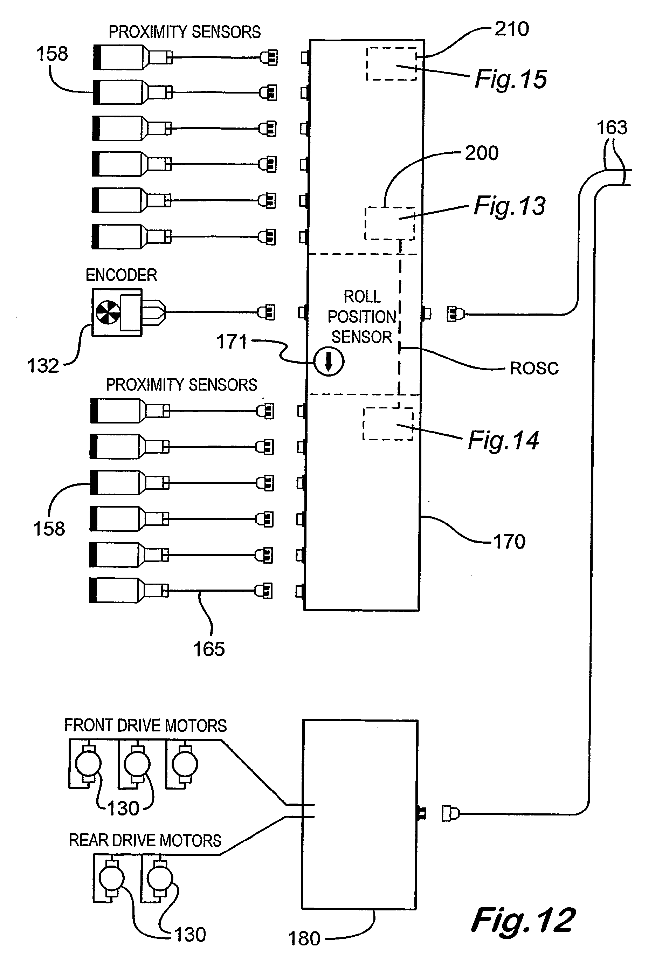

Referring to Fig. 12 the electronic signal and drive control mechanism 160 comprises a housing 170 and a housing 180. A drive signal and amplification circuit 200, and for each sensor 158, an output signal conditioning circuit 210 (only one of which is shown by way of example) is mounted in the housing 170. The twelve sensors 158 and encoder 132 are in electronic communication with circuits in the housing 170 via respective cables 165. An input/output 163 in the form of an umbilical cable 163 provides power and a connection between the electronic signal and drive control mechanism 160 and a computer 164. The cable 163 is 30.5m in length.

A roll position sensor 171 is also mounted in the housing 170. It comprises a potentiometer (not shown) without mechanical clip limits (to permit 360° rotation) and an axle supported by roll bearings. The potentiometer is fixed to the housing 170 that is in turn fixed to the hollow body 102. A weight is mounted eccentrically on one end of the axle such that it hangs down under gravity and maintains the axle in the same orientation. The other end of the axle is provided with a wiper contact for the potentiometer. When the apparatus 100 rotates about its longitudinal axis the potentiometer also rotates. By virtue of the weight on the axle, the axle maintains its orientation but moves the wiper relative to the potentiometer. Thus the output of the potentiometer can be caused to vary to give a voltage representative of rotational position of the apparatus 100. The potentiometer is supplied with a stable dc voltage of ±10V and thus according to the rotational position of the apparatus 100, the output voltage will shift between +10v and -10V. Furthermore the direction of rotation of the apparatus 100 can be inferred from whether the output voltage moves more positive or more negative. The output voltage is supplied through the input/output cable 163 to the computer 164 where it is converted to a display of the rotational position of the apparatus 100 for a user.

The housing 180 comprises drive electronics that serve to switch the electric motors 130 on and off under control of the computer 164. The speed of the motors can be adjusted to run the tool through a riser R at speeds of up to 0.5ms⁻¹.

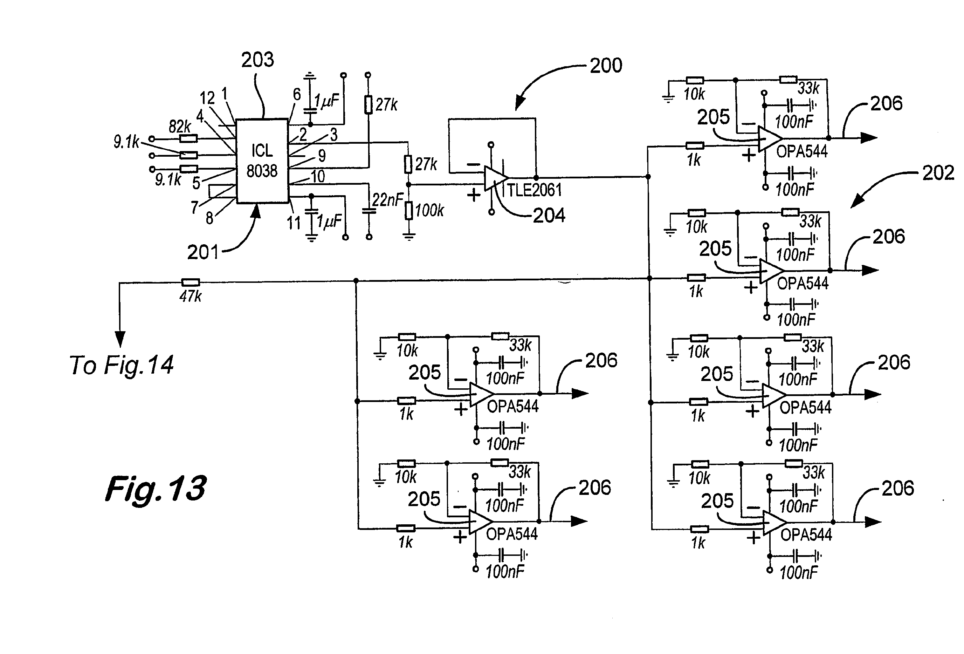

Referring to Fig. 13 a driving signal generation and amplification circuit is generally identified by reference numeral 200 that comprises a signal generation section 201 and an amplification section 202. The signal generation section 201 comprises a monolithic integrated circuit 203 made by Harris Corporation under product number ICL8038 that is used to generate a sinusoidal driving signal of 2kHz. Pins 4 and 5 of the ICL8038 provide control of the duty cycle frequency. In this case a 9.1kΩ resistor is connected to the input of pin 4 and a 9.1kΩ resistor is connected to the input of pin 5. When the two values of these resistors are equal, as in this case, this ensures that the output (from pin 2) has a duty cycle of 50% i.e. is symmetric. The supply voltage across pins 6 and 11 is ±15V; this ensures that the output sine wave oscillates about 0V. Pins 7 and 8 are connected together to reduce output frequency drift. Pin 10 has a timing capacitor of 22nF. The sine wave adjustment pins 1 and 12 are not used.

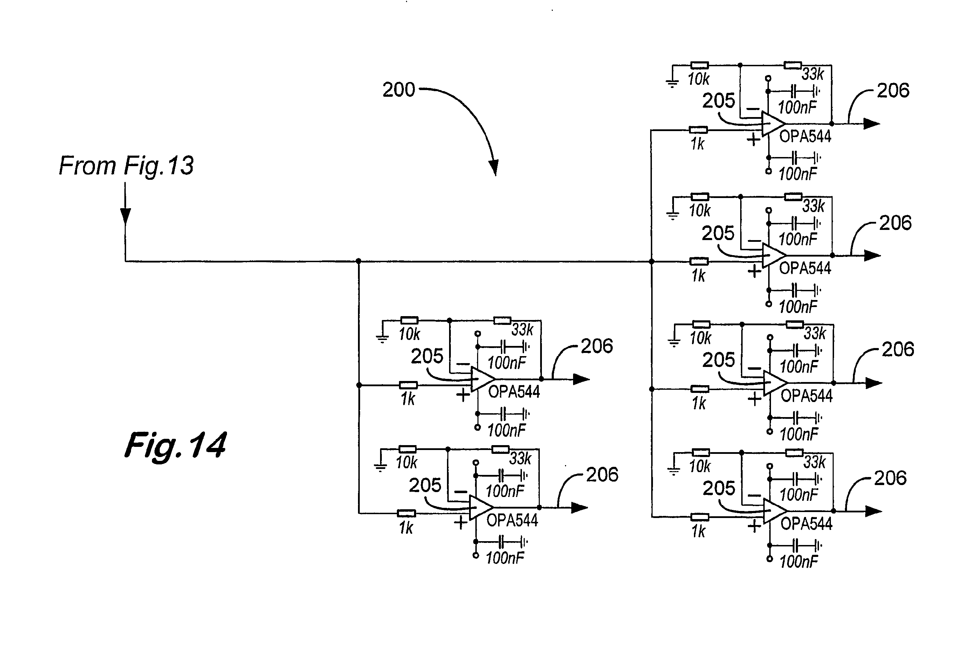

The output from the signal generation section 203 is on pin 2 and is of 2kHz frequency and 4.65V amplitude. The output is buffered by a non-inverting amplifier 204, in this case a TLE2061 made by Texas Instruments. The output from the non-inverting amplifier 204 is supplied to twelve identical integrated amplifiers 205, six of which are shown in Fig. 13 and six of which are shown in Fig. 14. The two blocks of amplifiers take the same input signal i.e. the output from the non-inverting amplifier 204 and amplify it with a gain of 4.3 to provide twelve respective driving signals at outputs 206, each of 20V amplitude. Each output 206 is supplied to a respective sensor 158. The provision of separate power amplifiers per sensor 158 helps to inhibit load variation between sensors having an affect on other sensors. Furthermore the use of a single master signal generator reduces interference (magnetic flux coupling) between the sensors 158.

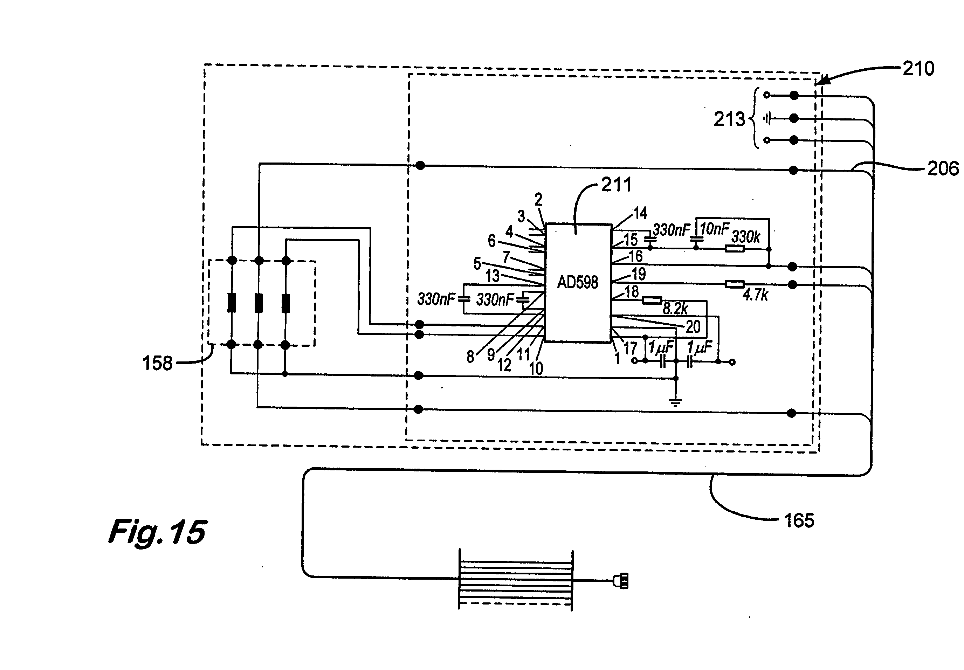

Referring to Fig. 15 the output signal conditioning circuit 210 comprises an AD598 monolithic circuit 211 manufactured by Analog Devices, Inc., US. Pins 1 and 20 supply -15V and +15V respectively to the circuit 211. Although each circuit 211 contains an internal oscillator, it is not used for the reasons given above. Thus pins 2 to 7 which access this internal oscillator are not used.

Respective capacitors across pins 8 and 9, 12 and 13, and 14 and 15 are each 330nF. This value is determined on the basis of the desired bandwidth of the subsystem which in this case is 300Hz i.e. the maximum frequency of movement of the riser relative to the coils that the circuit can measure.

Pins 10 and 11 are connected across the passive coils at the extremity of the sensor 158 i.e. the upper and lowermost as shown in Fig. 8. These two coils are connected in series. Pin 16 carries the output signal from the circuit 211 which is fed back in to pin 15 via a low pass filter of 10nF and 330kΩ that has a time constant of 3.3ms. The output voltage is also sent via a cables 165 and 163 to the computer 164 and displayed to a human operator inspecting the riser R. The 330kΩ resistor also sets the gain that was determined by experimentation to reach sufficient sensitivity for the longest expected measuring distance (in this case 25mm).

An 8.2kΩ resistor is on pin 18 and a 4.7kΩ resistor is on pin 19. These resistors set the offset voltage adjustment.

The cable 165 also provides a power supply 213 for supplying power to the circuit 211.

In use, the driving signal is generated from the signal generation circuit 200 and is split and amplified to form twelve AC driving signals of 20V amplitude. Each driving signal 206 is supplied to a respective sensor 158. Each sensor 158 is identical in construction. Accordingly, referring to one sensor only, the driving signal 206 is supplied to the central (active) coil 161b of the sensor 158. This AC current sets up an oscillating magnetic field as shown in Fig. 10. When changing in magnitude, the magnetic flux of the magnetic field cuts the windings of the other two passive coils 161a, 161c in the sensor 158 and induces a respective oscillating voltage. When in position in a riser R, the wall adjacent the sensor 158 acts to couple the magnetic flux between the active coil 161b and the passive coils 161a, 161c because it is constructed from a magnetisable and electrically conductive material, in this case low carbon steel. Thus, the amount of magnetic flux adjacent the riser wall varies according to the shape of the riser wall. Should the inner surface of the riser wall move further from the active coil 161b (for example if it is thinner), the amount of magnetic flux coupling is reduced and the voltage induced in the two passive coils 161a, 161c is also reduced, but by different amounts because the distance between each passive coil 161a, 161c and the riser R is different. Should the inner surface of the riser wall move nearer to the central coil (for example if is thicker or there is a dent in the riser), the amount of magnetic flux coupling is increased and the voltage induced in the two passive coils 161a, 161c is also increased (by different amounts in each passive coil). In this way the riser wall acts to affect the mutual inductance between the active coil 161b and each of the passive coils 161a, 161c.

The AC output voltages of the two passive coils 161a, 161c drive the circuit 211. The input to the AD598 is a pair of AC voltages whose amplitude difference is proportional to the physical displacement of the riser wall with respect to the active coil 161b. The passive coil 161c nearest to the riser wall will have a larger voltage induced than the passive coil 161a farthest from the riser wall. The output (on pin 16) from the AD598 is a DC voltage proportional to the physical displacement of the riser wall with respect to the active coil 161b. This DC voltage is used as a measure of the distance between each sensor and the inner surface of the riser that the applicant has found enables the inner surface to be inspected for wear.

Before the apparatus 100 can be used to inspect a riser R, the sensors 158 must be calibrated. This is done using a small section of test tubular made from the same material used to make whatever type of tubular is to be inspected, and that is known to be of uniform wall thickness and circular in cross section. In order to insert the apparatus 100 into a tubular the applicant has designed an insertion tool that comprises three metal ribs spaced at 120° intervals around the circumference of two spaced-apart metal strips, each formed into a circle of a diameter that is the same as the diameter of the test tubular. The ribs are positioned to support the rollers of the apparatus, and extend slightly forward at one end to form a flared portion of larger diameter by means of which the insertion tool may be offered up to and located on the open end of the test tubular. If the rollers of the centralizing mechanisms 110 and 120 are displaced relative to one another, more ribs will be needed to support the apparatus. When in position the insertion tool provides a substantially continuous surface for the rollers to move along. Actuation of the electric motors 130 drives the apparatus 100 into the test tubular and may be stopped when the sensors 158 are within the test tubular, but leaving the adjustment mechanism (i.e. sleeve 153, etc.) of the sensing system 150 exposed. By means of the co-operation between the forward centralizing mechanism 110 and the test tubular, and between the rear centralizing mechanism 120 and the insertion tool, the apparatus 100 is automatically centralized in the test tubular. Using the adjustment mechanism as described above, the sensors 158 are moved to a position where the working face of each sensor is 5mm from the inner surface of the test tubular. Once at the distance the adjustment mechanism is set to retain the sensors 158 in position. The signal generation circuit 200 is now actuated to apply the driving signal 206 across each active coil 161b of the sensors 158. The DC output voltage from the circuit 211 is recorded for each sensor 158. This process is repeated with the sensors at 15mm and 25mm from the inner surface of the test tubular. This creates three DC output voltage values per sensor. The relationship between these three readings is not linear as the magnetic field falls as 1/r from the end of the active coil. Thus a 1/r curve can be fitted to each group of three results for the sensors 158.

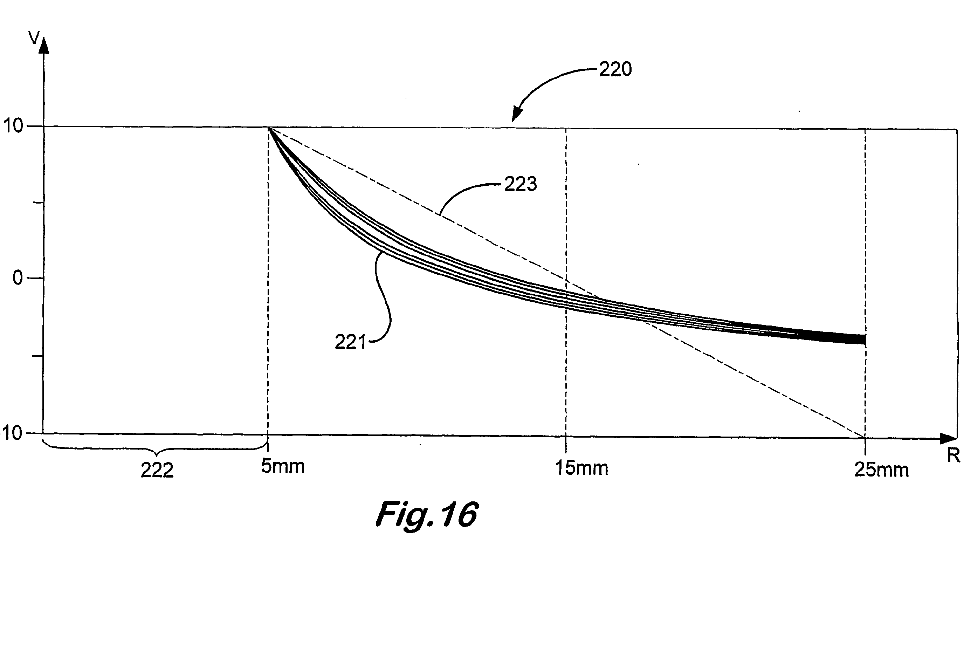

Referring to Fig. 16, a calibration curve generally identified by reference numeral 220 comprises 1/r curves 221 that have been fitted for six of the sensors 158 respectively. However, as mentioned above each active coil 161b is 6mm behind the working face of each sensor. Thus if the distance between the working face of the sensor 158 and the inner surface is used for calibration purposes, each 1/r curve must be shifted along the r axis to take this into account. Thus the region 222 between r=0mm and r=5mm as measured from the working face of each sensor, corresponds to the 6mm distance that the active coil 161b is behind the working face. Once each curve 221 has been fitted for each sensor 158, all DC output voltage values between the minimum distance of 5mm and the maximum distance of 25mm can be determined. It will be appreciated that the maximum and minimum values of the calibration are determined on the basis of the expected maximum and minimum variations of the distance between the riser internal surface and the sensors. Accordingly, it is sensible to calibrate the sensors over the expected range of normal operation. It is of course possible to take more than three readings with which the 1/r curves may be fitted.

Thus, if the DC output voltage of each circuit 211 is plotted against longitudinal position of the apparatus in a riser R, the results are misleading as the relationship is not linear. In order to overcome this, the 1/r curves 221 are split into a sufficient number of values (e.g. corresponding to the number of bit levels of an analogue to digital converter) between -10V and +10V, the lowest and highest DC output voltages. Each DC output voltage value is then related to a corresponding voltage on a linear line 223 that provides a linear relationship between distance r and voltage. A lookup table is generated that maps the number of DC output voltages over the full range of r=5mm to r=25mm to the same number of linear values on the line 223. In this way, when a DC output voltage is generated and sampled digitally, the corresponding voltage on the linear scale can be looked up and plotted. Thus changes in distance of the riser wall from each sensor 158 can be displayed graphically, and changes on the trace of the graph can be interpreted easily as variations are linear. The lookup table for each sensor 158 is stored in computer readable memory on the external computer 164.

Should the apparatus 100 need to be used with tubulars constructed of a different material, e.g. aluminium, stainless steel, high alloy steel, and/or of different radius, it is advisable to re-calibrate the sensors. This is because the magnetic properties of each material are different and therefore the magnetic flux coupling provided by them may change. Furthermore the radius of the tubular determines how much material is near each sensor to provide magnetic flux coupling. All of this may result in a change in inductance of the passive coils 161a, 161c for a given magnetic field. Accordingly, it may also be necessary to adjust the frequency and amplitude of the driving voltage to change the magnitude of the magnetic field generated by the active coil 161b. The applicant has found that a driving frequency of 2kHz and 20V amplitude works very well on low carbon steel from which drilling risers are frequently made, the drilling risers being between about 0.46m (18") and 0.61m (24") in diameter. However, for tubulars made with other materials and of other radii the driving frequency may be between about 20Hz and 20kHz.

Once the sensors 158 have been calibrated, the apparatus is ready to inspect a riser. For inspection purposes the applicant has found that, for coils spaced at 30° intervals with the outer diameter of the coils being 28mm and inner diameter being 17mm and driven by a voltage of 2kHz and 20V, the working face of the sensors 158 should be about 12.7mm (0.5") from the inner surface of the riser i.e. about half way between the maximum and minimum calibration points, although results are achievable at more or less than this. The applicant has found that this produces a magnetic field of sufficient strength to be sensitive enough to detect changes in distance of 0.1mm for a wear or corrosion area of approximately 0.076m (3") to 0.1m (4") in diameter. However, if the magnetic field is too strong, the sensitivity of each sensor is reduced due to magnetic flux coupling between adjacent sensors, whilst if it is too weak the sensitivity drops quickly with increasing distance from the riser's inner surface. Each sensor does not measure the distance to a point on the inner surface of the riser. Rather each sensor measures an "average" distance over an inspection area where the magnetic field is coupled by the riser. As the magnetic field spreads out from the coil this inspection area is likely to be slightly larger than the area of the active coil 161b, depending on the distance between the active coil and the riser. Thus the sensors are designed to respond to relatively large-scale defects (e.g. greater than about 1 inch²), rather than very small defects such as cracks.

The apparatus 100 can be inserted into a riser R with the insertion tool described above. By means of the remote computer 164 to which the apparatus is connected via the umbilical cable 163, the electric motors 130 can be actuated to drive the apparatus into the riser. The initial orientation of the apparatus in the riser is not particularly important because the apparatus enables substantially the entire interior circumference of the riser to be inspected simultaneously. Once in the riser R the apparatus 100 is supported centrally with respect to the longitudinal axis of the riser by the centralizing mechanisms 110 and 120 which apply a constant outward force to the inner surface of the riser by means of the torsion springs 115. Under this spring force, the design of the linkage mechanism of the cage 112, as described above, ensures that the apparatus is centralized in the riser. Furthermore this places the sensors 158 in a substantially independent frame of reference with respect the interior surface of the riser R.

The apparatus can be moved at up to 0.5ms⁻¹ through the riser R with the present electric motors. The speed could be higher than this. The freewheeling roller 116 to which the incremental linear encoder 132 is attached provides a means to monitor the position of the apparatus 100 within the riser R. When the apparatus 100 is inserted into the riser R the linear encoder 132 is zeroed. As the apparatus is moved the linear encoder 132 provides an output signal that is representative of the distance between the zeroed position (at or near the end of the riser) and the position of the apparatus in the riser.

Whilst the apparatus 100 is moving the active coil 161b of each sensor 158 is driven by the driving output signal 206 from a respective amplifier of 2kHz frequency and 20V amplitude, as described above. The use of a single signal generation circuit 200 per sensor helps to reduce interference between adjacent sensors as driving signals 206 can be substantially synchronized i.e. in phase and of substantially the same magnitude. This has the benefit that the sensors can be arranged in one plane substantially orthogonal to the longitudinal axis of the pipe i.e. multi-channel measurements in the same longitudinal location can be made substantially simultaneously.

As an AC supply signal is input into the active coils 161b of each sensor, a time-varying magnetic field is established around each driving coil of each sensor. As described above this time-varying magnetic field induces a time-varying voltage in the two passive coils that are used to generate a DC output voltage by the circuit 211. In the presence of the wall of the riser, which is an electrically conductive and magentisable material, the flux from each active coil 161b is coupled and results in different voltages being continuously induced in the two passive coils 161a, 161c because they are spaced at different distances from the wall of the riser and therefore intersect different amounts of magnetic flux. Thus, the DC output voltage from circuit 211 represents a substantially continuous measurement of the distance between each sensor 158 and the inner surface of the riser i.e. it represents the shape of the inner surface of the riser R. To assist this it is advisable that the two passive coils 161a, 161c have the same properties i.e. cross section, length and number of turns so that they have substantially the same inductance for a given magnetic field. This ensures that at different distances from the surface of the riser, different voltages are induced. The active coil 161b could be a different size to the passive coils 161a, 161c.

Increasing any of the cross-sectional area, length or number of turns of the coils, or increasing the driving voltage to each active coil can increase the maximum measuring distance of the sensors 158 and vice *versa*. If increased, this produces a magnetic field of a larger area projected onto the riser and therefore of larger inspection coverage. However, this risks a loss in sensitivity in adjacent sensors 158 where the separation between them remains the same and a reduction in resolution of the sensors. For the typical diameters of risers to be inspected the applicant has found that the dimensions and driving voltage of each sensor given above have produced good results, where interference is relatively low and inspection coverage relatively high. In this configuration each sensor has an approximate inspection area on the riser of diameter between 50.8mm (2") and 76.2mm (3"), and the measurement of distance represents an average value over this area.

The output DC voltage of each sensor 158 is sampled by an analogue to digital converter. Each sample value is used to look up the linearised voltage value in the look-up table. Each of these linearised values could be displayed graphically to the user on the external computer 164. However, the applicant has found that as the distance between a sensor and the inner surface of the riser increases, the signal to noise ratio of DC output voltage decreases. To reduce the effect of this, sixteen such linearised values are stored and then an average is calculated of the sixteen values. After this, each new incoming value is added to the group of sixteen values and the first value is dropped from the group. This new group of sixteen values is used to calculate a new average value. This process is repeated to form a moving average of sixteen samples of the DC output voltage, which helps to reduce the effects of noise in the DC output voltage. Of course, the number of samples could be more or less than this.

At this stage the output from the linear encoder 132 is passed through the analogue to digital converter, sent to the external computer 164, associated with each average value and stored in electronic memory. The association may be achieved using a suitable clock reference signal. Whilst the apparatus 100 moves along the riser R the roll position sensor 171 provides an output voltage between -10V and +10V indicative of the rotational position of the apparatus in the riser R. Again this output signal is passed through the analogue to digital converter, sent to the external computer 164, associated with an average value of the DC output voltage from each circuit 211 and stored in electronic memory. The association may be achieved by using a suitable clock frequency. Thus, each output average value is associated with a longitudinal position measurement and a rotational position measurement. In this way any relatively large scale defects or irregularities can be readily located. To maintain uniformity of results one of the sensors 158 may be marked to indicate that it should be uppermost in the riser i.e. at a 12 o'clock position. This assists orientation of the apparatus 100 when being inserted into the riser and means that all sensors will be in substantially the same orientation during each inspection.

In the applicant's experience the irregularities in the internal surface of the risers R and the behaviour of the rollers 116, can cause the apparatus 100 to drift around the longitudinal axis of the riser R. Thus it is important to monitor the rotational position of the apparatus 100 over time. However, of various risers tested the rotational drift of the apparatus is small, typically no more than ±3°. Even if the rotational position does change the quality of the inspection results is not inhibited.

It will be apparent that when a sensor passes over a worn area on the internal surface (as shown in Fig. 9) the distance between the sensor and the internal surface increases. Therefore to display them as such to an operator may be misleading. Accordingly, the output average DC output voltage values are further electronically processed at the external computer 164 to invert them such that when plotted graphically (on the y-axis) against the longitudinal position of the measurement, an increase in the y-value corresponds to a raised portion on the internal pipe surface and vice-versa.

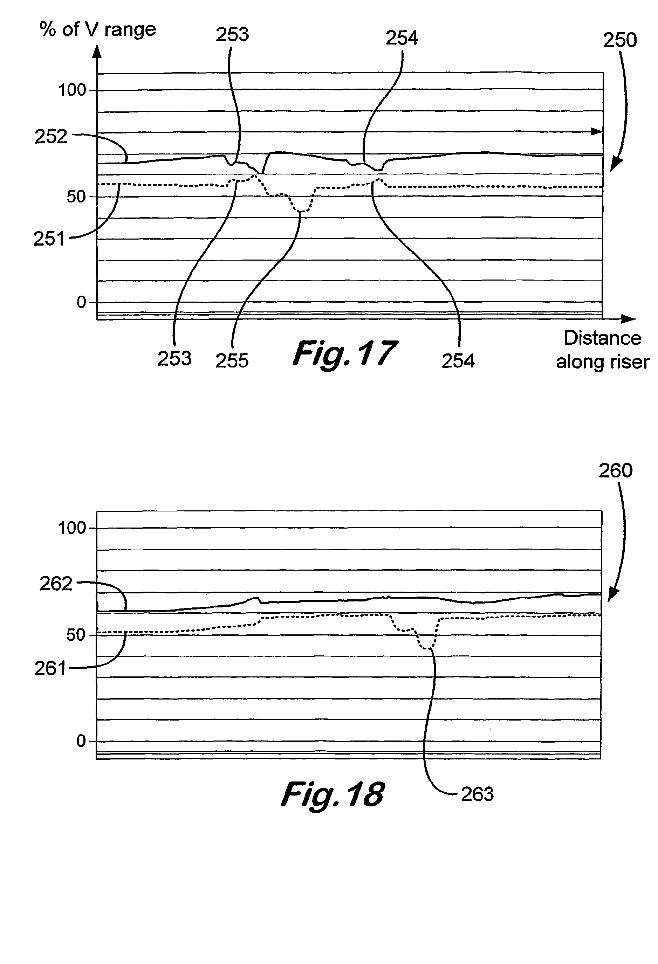

Referring to Figs. 17 to 20, example output traces on a computer display screen are shown generally identified by reference numerals 250, 260, 270 and 280 respectively. The display comprises an x-axis that is the longitudinal position of the sensor with respect to the riser, and a y-axis that represents the output voltage as a percentage of full voltage output. Each graph comprises two traces 251, 252; 261, 262; 271, 272; and 281, 282 respectively.

In Fig. 17 the two traces 251 and 252 are of diametrically opposed sensors inspecting a length of approximately 2.5m of a riser. One of the rollers on the front centralizing mechanism is positioned to run over a man-made defect of 0.24m by 0.24m and of two depths: 2.5mm and 4.5mm; after which one of the sensors will pass over the defect, followed by a roller of the rear centralizing mechanism. The traces are relatively flat until the roller of the front mechanism encounters the defect. Part 253 of each trace indicates the variation in measured distance between each sensor and the inner surface of the riser as the roller passes over this defect. One sensor moves toward the riser wall and the other away. Following this, one sensor passes over the defect and the trace 251 of this sensor shows the defect at part 255. The sensitivity of the sensor passing over the defect is such that the two depths in the defect are clearly visible. Part 254 of each trace corresponds to the roller of the rear centralizing mechanism passing through the defect. It will be noted that the effect of the defect on the sensor position appears smaller at part 254. This is because the sensor is further from the rear centralizing mechanism such that the rotation of the apparatus about an axis perpendicular to the longitudinal axis of the riser causes a smaller movement of the sensor. It will be apparent that the traces of the diametrically opposed sensors are the inverse of one another when the roller passes over the defect. Software examining the output traces may look for such a pattern and either remove the faulty indication of a defect or highlight the region as likely to originate from a roller passing through a defect.

In Fig. 18 the two traces 261 and 262 are of diametrically opposed sensors, with no roller passing over the defect. A part 263 of trace 261 corresponds to one sensor moving over the defect. Accordingly the percentage of full output voltage of that sensor falls because the magnetic flux coupled by the riser falls. The trace 262 remains substantially constant indicating that the distance between that sensor and the riser has also remained constant and therefore that that part of the riser's internal surface is in good condition. It will be noted that the presence of the defect has not affected the trace 262 because none of the rollers are passing through the same or a different defect at the time of measurement.

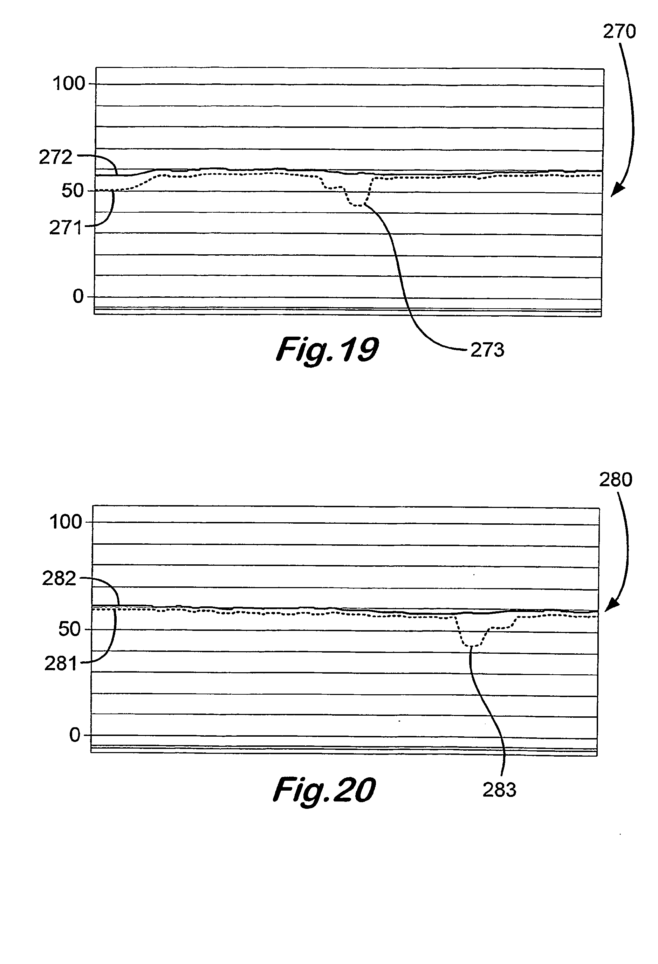

In Fig. 19 the two traces 271 and 272 are of two adjacent sensors i.e. 30° apart, with no rollers passing through the defect. A part 273 of trace 271 corresponds to one sensor moving over a defect. Accordingly the percentage of full output voltage of that sensor falls because the magnetic flux coupled by the riser falls. The trace 272 remains substantially constant indicating that the distance between that sensor and the riser has also remained constant and therefore that that part of the riser's internal surface is in good condition. It will be noted that the presence of the defect has not affected the trace 272. This is because no rollers are passing over the same or a different defect at the same time.

Fig. 20 shows the same arrangement of Fig. 19 passing over the defect in a reverse direction.

As explained above, should one of the rollers 116 pass across a raised or worn portion on the internal surface, the apparatus may become slightly decentralized. Thus the sensors 158 are shifted relative to the internal surface, with some moving toward and some moving away from the internal surface. This will cause the output DC voltage of each sensor to change accordingly. However, the applicant has found that this effect is very small as the offset between the rollers 116 of the two centralizing mechanisms 110 and 120 reduces the chances of both centralizers being off-centre simultaneously. Furthermore the sensors are positioned near the centre of the apparatus 100 so that any rotation about an axis perpendicular to the longitudinal axis of the riser results in only a small displacement of the sensors.

Should one or more of the sensors 158 encounter a raised portion inside the riser, the spring 165a allows the sensor 158 to be pivoted and dragged over the obstruction. In this way damage to the sensors is inhibited. The spring 165a permits this sensor movement when the apparatus 100 is moved in both a forward and a backward sense through a riser.

The apparatus 100 may be run along a riser R and the outputs from the twelve sensors 158, the linear encoder 132 and the roll position sensor 171 electronically processed and stored in computer readable memory as described above. The results can be viewed in the format described above in connection with Figs. 17 to 20 for example. Once the apparatus 100 has reached the end of the riser it can be extracted using the insertion tool described above. Alternatively, the apparatus could be reversed and the riser re-scanned to improve reliability of results. Optionally the sensor adjust mechanism may comprise means for rotating sensors about an angle around the longitudinal axis of the riser and the riser scanned with the apparatus moving in reverse. This would help to improve the reliability of the results. The angle of rotation may be such so as to substantially bisect the angle between sensors in their first position so that the path where inspection is least accurate in the forward direction is then inspected in the reverse direction.

In one aspect a riser may be inspected as described above and the results stored electronically. After use in a well, the same riser may be inspected again and the two sets of results compared.

When the adjustment mechanism of the sensing system 150 has been set in position for the particular diameter of riser R to be inspected, the distance between the working faces of diametrically opposed sensors 158 can be measured. This measurement can then be used to determine the inner diameter of the riser R between two opposing sensors by the addition of that measurement to the two measured distances from those sensors as determined above. In this way, by taking six diameter measurements from the twelve sensors it is possible for the ovality of the riser at that point to be determined, and then recorded continuously or at points along the length of the riser R.

There may be more that one centralizer at each end of the apparatus 100. It is expected that the use of more than one centralizer at each end will help to reduce the movement of the apparatus away from a centred position when one or more rollers moves over a portion of wear. Furthermore the rollers of the additional centralizers may be offset with respect to some or all of the other centralizers to further reduce this problem.

The apparatus could be adapted, by rearrangement of the disposition of the sensors, to inspect the outside of any tubular or either side of a substantially flat sheet product comprising an electrically conductive and/or magnetisable material e.g. a ferromagnetic material.

Any number of sensors 158 may be used. In certain aspects, an even number of sensors are used with the sensors diametrically opposed to each other, but it is within the scope of this invention to use one sensor or an odd number of sensors.

A method and apparatus according to the present invention can be used to inspect any tubulars (risers, etc.) for internal irregularities, such as corrosion, wear, pits, recesses, and dents. The apparatus can be adjusted to inspect tubulars of various diameters. In certain aspects such systems are dimensioned to inspect risers ranging in diameter between 0.45m (18") and 0.61m (24").

The sensing system 150, in one particular aspect, uses sensors 158 with an ironless coil system. The sensors according to the present invention may have no ferromagnetic internal cores within their coils, or have cores of non-ferromagnetic material. The conductive metal wall of the riser being inspected causes detectable magnetic field variations in the coils. The sensors produce a field that intersects the riser wall that acts to couple the magnetic field with the passive coils.

Although the coils of each sensor have been described as identical in dimension it is feasible that they could be different dimensions in one sensor. It is also possible to use just one active coil and one passive coil. Furthermore the order of the coils in the sensor can be changed as desired. For example, the active coil does not have to be between the passive coils.

The magnetic flux may be measured by any suitable means e.g. by magnetoresistance, Hall sensors, etc.

It is within the scope of this invention to use any desired number of roller mounts and rollers, e.g., but not limited to, one, two, three, four, five or more on the centralizer mechanisms 110 and 120 and on any centralizer mechanism of any system according to the present invention. As is the case with any part of the apparatus 100 and any apparatus according to the present invention, parts may be made of; any suitable metal, including, but not limited to, aluminium, aluminium alloys, zinc, zinc alloys, brass, bronze, steel, and stainless steel; any suitable plastic, including, but not limited to polytetrafluoroethylene; composite materials; and/or fibreglass.

As used in the appended claims, the following terms may, but not necessarily, take the following definitions in addiction to or instead of the meaning given in the specification:

"Electronic processing means": may mean any electronic processing apparatus or device capable of processing the output signals from the or each non-contract measuring means;

"Means for generating a differential electrical signal representative of the difference between the measurements in two different positions": may mean any signal conditioning apparatus or device comprising electronics capable of performing this function;

"Induction means": may mean any apparatus or device capable of having a voltage induced by a changing magnetic field, for example a coil of metal wire;

"Means for generating a time-varying magnetic field": may mean any apparatus or device capable of generating such a field, for example a coil of metal wire;

"Driving means for supplying a substantially synchronous driving voltage": may mean any apparatus or device capable of producing a synchronous voltage to drive a plurality of sensors (non-contact measuring means);

"Bias means": may mean any device or apparatus capable of providing a bias to the rollers, for example, springs (torsion, leaf, coil, etc.), weights etc.

"Motor means": may mean any motor apparatus capable of driving the rollers, for example and electric motor.

"Means for, in use, monitoring a longitudinal position of a tubular being inspected by the apparatus": may mean any linear motion encoding apparatus or device, for example a incremental linear encoder;

"Means for monitoring a rotational orientation of the apparatus with respect to a tubular being inspected": may mean any apparatus or device capable of achieving this function; and

"Inspection means": may mean any apparatus or device capable of inspecting a tubular, for example an ultrasonic device, an electromagnetic device, a video camera device, etc.

## Claims

1. A non-contact method of inspecting a tubular for defects, said tubular comprising an electrically and/or magnetically conductive material, which method comprises the steps of : -
(1) maintaining a plurality of non-contact measuring means (158) in a substantially fixed frame of reference substantially independent of said tubular;
(2) taking a measurement representative of a distance between each of said plurality of non-contact measuring means (158) and a surface of part of a tubular, each measurement taken by:
(a) providing a magnetic field adjacent the part of the tubular to be inspected, the magnetic field passing into, through and out of said part; and
(b) taking a measurement representative of the amount of magnetic flux of said magnetic field adjacent said part;
(3) generating an output electrical signal representative of said measurement, a change in the shape of one part of the tubular being manifested in a corresponding change in the amount of magnetic flux coupled by that part, whereby said electrical output signal is caused to vary in accordance with the shape of the tubular; and
(4) repeating step (2) at different parts of the tubular, variations in the distance measurements being representative of a change in shape of said surface, whereby the location of defects is facilitated;
**characterised by** the steps of effecting simultaneous radial adjustment of said plurality of non-contact measuring means (158) to a predetermined distance from the surface of said tubular prior to inspection, generating said magnetic field using a plurality of active coils (161b) and supplying a substantially synchronous driving voltage to each active coil (161b) whereby interference between said non-contact measuring means (158) is inhibited such that each of said plurality of non-contact measuring means (158) may perform step (2) substantially simultaneously, and in that step (b) is performed in a region where said magnetic field has a dominant component of direction substantially perpendicular to a tangent to said part.

2. A method as claimed in claim 1, further comprising the step of taking a measurement at a plurality of parts of the tubular substantially simultaneously, said plurality of parts around the circumference of the tubular.

3. A method as claimed in claim 2, further comprising the step of moving said non-contact measuring means (158) along the tubular so as to inspect the tubular along a plurality of substantially linear paths over the surface of the tubular.

4. A method as claimed in claim 1, 2 or 3, further comprising the step of measuring said magnetic flux by induction of a voltage caused by a change in shape of said part.

5. A method as claimed in claim 1, 2, 3 or 4, wherein said electrical output signal is indicative of the distance between a surface of said part and a point of reference on said non-contact measuring means (158).

6. A method as claimed in any preceding claim, further comprising the step of generating a time-varying magnetic field by means of which the shape of said part may be monitored substantially continuously during inspection.

7. A method as claimed in claim 6, further comprising the step of using said time-varying magnetic field to induce a voltage in the non-contact measuring means (158) adjacent said part, the magnitude of said induced voltage varying according to the shape of said tubular.

8. A method as claimed in any preceding claim, further comprising the step of taking at least two measurements representative of the amount magnetic flux of said magnetic field adjacent said part, wherein said at least two measurements are taken in positions where the magnetic flux is different.

9. A method as claimed in claim 8, wherein said at least two measurements are taken at different distances from said part.

10. A method as claimed in claim 8 or 9, further comprising the step of generating a differential electrical signal representative of the a difference between said first and second measurements.

11. A method as claimed in any preceding claim, further comprising the step of taking said measurement of magnetic flux with a first passive coil (161a), the method being such that the part of said tubular adjacent said coil acts to couple magnetic flux between said active coil (161b) and the first passive coil (161a), a change in shape of said part resulting in a change in the mutual inductance between the coils.

12. A method as claimed in claim 11, further comprising the steps of taking said measurement with the first passive coil (161a) and a second passive coil (161b), the respective voltages induced in the first and second passive coils being different, and generating an electrical output signal representative of the difference between said voltages.

13. A method as claimed in claim 12, further comprising the step of processing with electronic processing means (160) said respective voltages to determine the ratio of the difference between them divided by their sum to obtain said electrical output signal in the form of a DC voltage that varies according to said distance.

14. A method as claimed in claim 11, 12 or 13, further comprising the step of taking a plurality of measurements of different parts of the tubular substantially simultaneously, each measurement being taken with a non-contact measuring means (158) that comprises an active coil (161b) and (a) a first passive coil (161a) or (b) first (161a) and second (161b) passive coils.

15. A method as claimed in any preceding claim, wherein a single frequency generator (200) generates said synchronous driving voltage and a separate driving voltage is generated therefrom for each non-contact measuring means (158).

16. A method as claimed in any preceding claim, wherein said distance is between approximately 6mm and 25mm.

17. A method as claimed in claim 16, wherein said distance is approximately 12.7mm.

18. A method as claimed in any preceding claim, further comprising the step of electronically recording said electrical output signal for each non-contact measuring means (158) to provide an indication of the presence of any defects in the surface of the tubular.

19. A method as claimed in any preceding claim, further comprising the step of progressively inspecting the internal and/or external surface of said tubular.

20. A method as claimed in claim 19, further comprising the step of monitoring and electronically recording the longitudinal position of said non-contact measuring means (158) along the tubular and associating each measurement with a longitudinal position.

21. A method as claimed in claim 19 or 20, further comprising the step of monitoring and electronically recording the rotational position of said non-contact measuring means (158) along the tubular and associating each measurement with a rotational position.

22. A method as claimed in any preceding claim, wherein said non-contact measuring means (158) is releasably secured on a body (102) in said substantially independent frame of reference, the method further comprising the step of substantially centralising said body (102) in the tubular.

23. An apparatus (100) for inspecting a tubular comprising an electrically and/or magnetically conductive material, which apparatus (100) comprises a body (102) having a plurality of non-contact measuring means (158) mounted thereon in a substantially fixed frame of reference relative to the body (102), a centralising mechanism (110, 120) for maintaining the apparatus (100) in a substantially fixed frame of reference substantially independent of the tubular being inspected, the arrangement being such that, in use, each of said plurality of non-contact measuring means (158) can take a measurement representative of a distance between the non-contact measuring means (158) and a respective surface of part of the tubular, a variation in the shape of the tubular corresponding to a movement of said part in the frame of reference, and generate an electrical output signal representative thereof, wherein said distance measurement is obtained by using a magnetic field that passes into, through and out of said part, and taking a measurement representative of the amount of magnetic flux of said magnetic field adjacent said part, a change in the shape of one part of the tubular being manifested in a corresponding change in the amount of magnetic flux coupled by that part, whereby said electrical output signal is caused to vary in accordance with the shape of the tubular to facilitate location of defects,
**characterised in that** said apparatus (100) comprises an adjustment mechanism (156) for effecting simultaneous radial adjustment of said plurality of non-contact measuring means (158) to a predetermined distance from the surface of said tubular prior to inspection, and **in that** each of said plurality of non-contact measuring means (158) comprises an active coil (161b) for generating said magnetic field with a dominant component of direction substantially perpendicular to a tangent to said part, and by driving means (200) for supplying a substantially synchronous driving voltage to each of said plurality of non-contact measuring means (158), whereby interference between the non-contact measuring means (158) is inhibited such that measurements representative of the distance between each of said plurality of non-contact measuring means (158) and said tubular may be carried out substantially simultaneously.

24. An apparatus as claimed in claim 23, wherein said plurality of non-contacting measuring means (158) is mounted on said body (102) such that, in use, inspection may be performed substantially simultaneously around substantially the entire circumference of part of the tubular.

25. An apparatus as claimed in claim 23 or 24, wherein said non-contact measuring means (158) comprises means for measuring (161a, 161c) said magnetic flux in two positions relative to said part.

26. An apparatus as claimed in claim 25, further comprising means for generating (210) a differential electrical signal representative of a difference between the measurements in two different positions.

27. An apparatus as claimed in claim 26, wherein said means for generating (210) a differential electrical signal comprises electronic processing means (211) for processing the output electrical signals from measurements in said two different positions by determining the ratio of the difference between them divided by their sum to obtain said electrical output signal in the form of a DC voltage that varies according to the distance between the non-contact measuring means (158) and said tubular.

28. An apparatus as claimed in any of claims 23 to 27, wherein said non-contact measuring means (158) comprises induction means (161a, 161c) for measurement of said magnetic flux by induction of a voltage caused by a change in shape of said part.

29. An apparatus as claimed in claim 28, wherein said induction means comprises a first passive coil (161a).

30. An apparatus as claimed in claim 29, further comprising a second passive coil (161c) spaced from said first passive coil (161a).

31. An apparatus as claimed in claim 30, wherein said first and second passive coils and said active coil are arranged substantially co-axially in a housing (158a), the arrangement being such that, in use, the axis of the coils (161a, 161b, 161c) lies substantially on a line on a radius of the tubular and the first and second passive coils are different distances from the part of the tubular being inspected.

32. An apparatus as claimed in claim 28, 29, 30 or 31, wherein said active coil (161b), the first passive coil (161a) and the second passive coil (161c) do not comprise a core such that, in use, magnetic flux coupling between the coils is affected predominantly by the position of said part relative to said coils.

33. An apparatus as claimed in claim 32, wherein said coils are positioned such that, in use, respective voltages induced into said first (161a) and second (161b) passive coils are different.

34. An apparatus as claimed in any of claims 23 to 33, wherein said driving means (200) can generate a time-varying magnetic field by means of which the shape of said part may be monitored substantially continuously during inspection.

35. An apparatus as claimed in any of claims 23 to 34, wherein said plurality of non-contact measuring means (158) is positioned on the circumference of a circle, whereby substantially the entire circumference of a tubular may be inspected at each instant an time.

36. An apparatus as claimed in any of claims 23 to 35, wherein said driving means (200) comprises a single frequency generator (203) and a plurality of amplifiers (205) for generating a respective driving voltage for each non-contact measuring means (158).

37. An apparatus as claimed in any of claims 23 to 36, wherein said adjustment mechanism comprises a mount (156b) that defines a path for travel of said non-contact measuring means, said mount being such that orientation of said non-contact measuring means is substantially preserved during travel along said path.

38. An apparatus as claimed in any of claims 23 to 37, wherein said adjustment mechanism (156) further comprises a member (156c) moveably mounted on said body (102), the arrangement being such that, in use, movement of said member (156c) effects substantially said simultaneous radial movement and adjustment of said plurality of non-contact measuring means (158).

39. An apparatus as claimed in any of claims 23 to 38, wherein said centralising mechanism (110, 120) comprises a plurality of rollers (126) mounted on said body and a bias means (115), the arrangement being such that, in use, said bias means (115) urges said plurality of rollers (126) toward the surface of a tubular to be inspected thereby said body (102) is positioned in an equilibrium position in the tubular in which the non-contact measuring means (158) is maintained at a predetermined distance from a surface of the tubular.

40. An apparatus as claimed in claim 39, wherein said equilibrium position is substantially co-axial with the tubular to be inspected.

41. An apparatus as claimed in claim 39 or 40, wherein said plurality of rollers (126) is mounted on said body (102) such that, under the bias of said bias means (115), the plurality of rollers (126) is maintained substantially on a common circumference.

42. An apparatus as claimed in claim 41, wherein said plurality of rollers (126) are interlinked such that movement of one roller (126) toward or away from said surface effects a corresponding movement of the remaining rollers (126).

43. An apparatus as claimed in any of claims 39 to 42, wherein each roller (126) is mounted on a first arm (113) that is pivotably mounted to said body (102), and said bias means (115) applies a rotational force to each arm (113), the rotational force being in the same sense for each arm (113).

44. An apparatus as claimed in claim 43, further comprising a second arm (116') mounted to one first arm of one roller (126) and another first arm of another roller (126) such that all first arms (113) are interlined by second arms (116') to provide a collapsible and expandable structure, said bias means (115) providing a bias force to urge said rollers (126) into engagement with a tubular, whereby said body (102) is a substantially centralised with respect to said tubular.

45. An apparatus as claimed in claim 44, wherein said body (102) is mounted substantially centrally within said structure such that the apparatus (100) is insertable into a tubular to be inspected.

46. An apparatus as claimed in any of claims 39 to 45, wherein said centralising mechanism comprises first (110) and second (120) centralisers spaced apart axially of said body (102).

47. An apparatus as claimed in claim 46, wherein said bias means (115) applies a bias force in the same rotational sense to said first and second centralisers.

48. An apparatus as claimed in any of claims 23 to 47, further comprising motor means (130) for driving the apparatus (100) relative to the tubular.

49. An apparatus as claimed in any of claims 23 to 48, further comprising means (132) for, in use, monitoring a longitudinal position of a tubular being inspected by the apparatus.

50. An apparatus as claimed in any of claims 23 to 51, further comprising means (171) for monitoring a rotational orientation of the apparatus with respect to a tubular being inspected.

51. An apparatus as claimed in claim 50, wherein said means (171) for monitoring a rotational orientation comprises a weight eccentrically mounted on a shaft, said weight being free to hang under gravity, and means fixed on said apparatus (100) for monitoring the rotational orientation of said weight, the arrangement being such that, in use, rotation of said apparatus (100) results in a movement of said weight relative to said apparatus.

52. An apparatus as claimed in claim 51, wherein said means fixed on the apparatus comprises a potentiometer and said weight is fixed to said shaft such that rotation of said apparatus results in a corresponding rotation of said shaft under action of said weight, whereby a output voltage across the potentiometer is caused to vary according to the rotational orientation of the apparatus.

53. A method of calibrating an apparatus according to any of claims 23 to 52, which method comprises the steps of : -
(a) placing the apparatus adjacent a section of a tubular that is known to be substantially circular in cross-section and of substantially uniform wall thickness;
(b) adjusting said plurality of non-contact measuring means to a first known distance from a surface of said section;
(c) taking said measurement for each of said plurality of non-contact measuring means; and
(d) repeating steps (a) to (c) at at least one other known distance from said pipe different to said first known distance;
whereby a non-linear variation in output from the non-contact measuring means between the known distances may be estimated electronically, whereby outputs representative of measurements taken between said known distances may be electronically interpreted and assigned a value on a linear scale corresponding to a distance.

54. A method as claimed in claim 53, further comprising the step of electronically fitting said measurements of known distance to a 1/r curve, where r is the distance from a point of the non-contact measuring means to a surface of the tubular, whereby expected outputs from the non-contact measuring means at distances other than said known distances may be estimated.

55. A method as claimed in claim 54, further comprising the steps of electronically associating said estimated outputs with linearised output values that follow a substantially linear relationship with distance from the tubular, generating a look-up table for the or each non-contact measuring means that relates the output values to the linearised values, and storing said look-up table in computer readable memory.

## Patentansprüche

1. Kontaktloses Verfahren zum Untersuchen einer Röhre auf Defekte, wobei die Röhre ein elektrisch und/oder magnetisch leitendes Material enthält, wobei das Verfahren die folgenden Schritte umfasst:
(1) Halten mehrerer kontaktloser Messmittel (158) in einem im Wesentlichen festen Bezugsrahmen, der von der Röhre im Wesentlichen unabhängig ist;
(2) Nehmen einer Messung, die einen Abstand zwischen jedem der mehreren kontaktlosen Messmittel (158) und einer Oberfläche eines Teils einer Röhre repräsentiert, wobei jede Messung genommen wird durch:
(a) Bereitstellen eines Magnetfeldes benachbart zu dem zu untersuchenden Teil der Röhre, wobei das Magnetfeld in den Teil, durch den Teil und aus dem Teil verläuft; und
(b) Nehmen einer Messung, die den Betrag des magnetischen Flusses des Magnetfeldes benachbart zu dem Teil repräsentiert;
(3) Erzeugen eines elektrischen Ausgangssignals, das die Messung repräsentiert, wobei sich eine Änderung der Form eines Teils der Röhre in einer entsprechenden Änderung des Betrags des magnetischen Flusses, der durch den Teil eingekoppelt wird, manifestiert, wodurch das elektrische Ausgangssignal zu einer Änderung in Übereinstimmung mit der Form der Röhre veranlasst wird; und
(4) Wiederholen des Schrittes (2) an verschiedenen Teilen der Röhre,
wobei Veränderungen in den Abstandsmessungen eine Änderung der Form der Oberfläche repräsentieren, wodurch die Lokalisicrung von Defekten erleichtert wird;
**gekennzeichnet durch** die Schritte des Ausführens einer gleichzeitigen radialen Einstellung der mehreren kontaktlosen Messmittel (158) auf einen vorgegebenen Abstand von der Oberfläche der Röhre vor der Untersuchung, des Erzeugens des Magnetfeldes unter Verwendung mehrerer aktiver Spulen (161b) und des Zuführens einer im Wesentlichen synchronen Treiberspannung zu jeder aktiven Spule (161b), wodurch eine gegenseitige Störung zwischen den kontaktlosen Messmitteln (158) verhindert wird, so dass jedes der mehreren kontaktlosen Messmittel (158) den Schritt (2) im Wesentlichen gleichzeitig ausführen kann, und **dadurch**, dass der Schritt (b) in einem Bereich ausgeführt wird, in dem das Magnetfeld eine vorherrschende Richtungskomponente besitzt, die zu einer Tangente an den Teil im Wesentlichen senkrecht ist.

2. Verfahren nach Anspruch 1, das ferner das im Wesentlichen gleichzeitige Nehmen einer Messung an mehreren Teilen der Röhre umfasst, wobei die mehreren Teile längs des Umfangs der Röhre vorhanden sind.

3. Verfahren nach Anspruch 2, das ferner den Schritt des Bewegens der kontaktlosen Messmittel (158) längs der Röhre umfasst, um so die Röhre längs mehrerer im Wesentlichen geradliniger Wege über der Oberfläche der Röhre zu untersuchen.

4. Verfahren nach Anspruch 1, 2 oder 3, das ferner den Schritt des Messens des magnetischen Flusses durch Induktion einer Spannung, die durch eine Änderung der Form des Teils verursacht wird, umfasst.

5. Verfahren nach Anspruch 1, 2, 3 oder 4, wobei das elektrische Ausgangssignal den Abstand zwischen einer Oberfläche des Teils und einem Bezugspunkt an den kontaktlosen Messmitteln (158) angibt.

6. Verfahren nach einem vorhergehenden Anspruch, das ferner den Schritt des Erzeugens eines zeitlich veränderlichen Magnetfeldes umfasst, mittels dessen die Form des Teils während der Untersuchung im Wesentlichen kontinuierlich überwacht werden kann.

7. Verfahren nach Anspruch 6, das ferner den Schritt des Verwendens des zeitlich veränderlichen Magnetfeldes umfasst, um in den kontaktlosen Messmitteln (158) benachbart zu dem Teil eine Spannung zu induzieren, wobei sich die Größe der induzierten Spannung entsprechend der Form der Röhre ändert.

8. Verfahren nach einem vorhergehenden Anspruch, das ferner den Schritt des Nehmens wenigstens zweier Messungen umfasst, die den Betrag des magnetischen Flusses des Magnetfeldes benachbart zu dem Teil repräsentieren, wobei die wenigstens zwei Messungen an Positionen genommen werden, an denen der magnetische Fluss unterschiedlich ist.

9. Verfahren nach Anspruch 8, wobei die wenigstens zwei Messungen in unterschiedlichen Abständen von dem Teil genommen werden.

10. Verfahren nach Anspruch 8 oder 9, das ferner den Schritt des Erzeugens eines differentiellen elektrischen Signals, das eine Differenz zwischen der ersten und der zweiten Messung repräsentiert, umfasst.

11. Verfahren nach einem vorhergehenden Anspruch, das ferner den Schritt des Nehmens der Messung des magnetischen Flusses mit einer ersten passiven Spule (161a) umfasst, wobei das Verfahren so beschaffen ist, dass der Teil der Röhre benachbart zu der Spule eine Kopplung des magnetischen Flusses zwischen der aktiven Spule (161b) und der ersten passiven Spule (161a) bewirkt, wobei eine Änderung der Form des Teils eine Änderung der gegenseitigen Induktivität zwischen den Spulen zur Folge hat.

12. Verfahren nach Anspruch 11, das ferner die Schritte des Nehmens der Messung mit der ersten passiven Spule (161a) und einer zweiten passiven Spule (161b), wobei die jeweiligen Spannungen, die in der ersten bzw. der zweiten passiven Spule induziert werden, unterschiedlich sind, und des Erzeugens eines elektrischen Ausgangssignals, das die Differenz zwischen diesen Spannungen repräsentiert, umfasst.

13. Verfahren nach Anspruch 12, das ferner den Schritt des Verarbeitens der jeweiligen Spannungen mit elektronischen Verarbeitungsmitteln (160) umfasst, um das Verhältnis der Differenz zwischen ihnen zu ihrer Summe zu bestimmen, um das elektrische Ausgangssignal in Form einer Gleichspannung, die sich entsprechend dem Abstand ändert, zu erhalten.

14. Verfahren nach Anspruch 11, 12 oder 13, das ferner den Schritt des im Wesentlichen gleichzeitigen Nehmens mehrerer Messungen von unterschiedlichen Teilen der Röhre umfasst, wobei jede Messung mit einem kontaktlosen Messmittel (158) genommen wird, die eine aktive Spule (161b) und (a) eine erste passive Spule (161a) oder (b) eine erste passive Spule (161a) und eine zweite passive Spule (161b) enthält.

15. Verfahren nach einem vorhergehenden Anspruch, wobei ein einziger Frequenzgenerator (200) die synchrone Treiberspannung erzeugt und hieraus eine getrennte Treiberspannung für jedes kontaktlose Messmittel (158) erzeugt wird.

16. Verfahren nach einem vorhergehenden Anspruch, wobei der Abstand im Bereich von etwa 6 mm bis etwa 25 mm liegt.

17. Verfahren nach Anspruch 16, wobei der Abstand etwa 12,7 mm beträgt.

18. Verfahren nach einem vorhergehenden Anspruch, das ferner den Schritt des elektronischen Aufzeichnens des elektrischen Ausgangssignals für jedes kontaktlose Messmittel (158) umfasst, um eine Angabe des Vorhandenseins irgendwelcher Defekte in der Oberfläche der Röhre zu schaffen.

19. Verfahren nach einem vorhergehenden Anspruch, das ferner den Schritt des allmählichen Untersuchens der inneren und/oder der äußeren Oberfläche der Röhre umfasst.

20. Verfahren nach Anspruch 19, das ferner den Schritt des Überwachens und elektronischen Aufzeichnens der longitudinalen Position des kontaktlosen Messmittels (158) längs der Röhre und des Zuordnens jeder Messung zu einer longitudinalen Position umfasst.

21. Verfahren nach Anspruch 19 oder 20, das ferner den Schritt des Überwachens und elektronischen Aufzeichnens der Drehposition des kontaktlosen Messmittels (158) längs der Röhre und des Zuordnens jeder Messung zu einer Drehposition umfasst.

22. Verfahren nach einem vorhergehenden Anspruch, wobei das kontaktlose Messmittel (158) an einem Körper (102) in dem im Wesentlichen unabhängigen Bezugsrahmen lösbar befestigt ist, wobei das Verfahren ferner den Schritt des im Wesentlichen mittigen Anordnens des Körpers (102) in der Röhre umfasst.

23. Vorrichtung (100) zum Untersuchen einer Röhre, die ein elektrisch und/oder magnetisch leitendes Material enthtält, wobei die Vorrichtung (100) einen Körper (102), der mehrere kontaktlose Messmittel (158) besitzt, die daran in einem im Wesentlichen festen Bezugsrahmen in Bezug auf den Körper (102) angebracht sind, und einen Zentriermechanismus (110, 120) zum Halten der Vorrichtung (100) in einem im Wesentlichen festen Bezugsrahmen, der von der zu untersuchenden Röhre im Wesentlichen unabhängig ist, umfasst, wobei die Anordnung derart ist, dass im Gebrauch jedes der mehreren kontaktlosen Messmittel (158) eine Messung nehmen kann, die einen Abstand zwischen dem kontaktlosen Messmittel (158) und einer entsprechenden Oberfläche eines Teils der Röhre repräsentiert, wobei eine Veränderung der Form der Röhre einer Bewegung des Teils in dem Bezugsrahmen entspricht, und ein elektrisches Ausgangssignal erzeugen kann, das hierfür repräsentativ ist, wobei die Abstandsmessung unter Verwendung eines Magnetfeldes, das in den Teil, durch den Teil und aus dem Teil verläuft, und durch Nehmen einer Messung, die den Betrag des magnetischen Flusses des Magnetfeldes benachbart zu dem Teil repräsentiert, erhalten wird, wobei sich eine Änderung der Form eines Teils der Röhre in einer entsprechenden Änderung des Betrags des magnetischen Flusses, der durch den Teil eingekoppelt wird, manifestiert, wodurch das elektrische Ausgangssignal zu einer Veränderung in Übereinstimmung mit der Form der Röhre veranlasst wird, um die Lokalisierung von Defekten zu erleichtern,
**dadurch gekennzeichnet, dass** die Vorrichtung (100) einen Einstellmechanismus (156) umfasst, um vor der Untersuchung eine gleichzeitige radiale Einstellung der mehreren kontaktlosen Messmittel (158) auf einen vorgegebenen Abstand von der Oberfläche der Röhre auszuführen, und dass jedes der mehreren kontaktlosen Messmittel (158) eine aktive Spule (161b) zum Erzeugen des Magnetfeldes mit einer vorherrschenden Richtungskomponente, die zu einer Tangente an den Teil im Wesentlichen senkrecht ist, und Treibermittel (200) zum Zuführen einer im Wesentlichen synchronen Treiberspannung zu jedem der mehreren kontaktlosen Messmittel (158) umfasst, wodurch eine gegenseitige Störung zwischen den kontaktlosen Messmitteln (158) verhindert wird, so dass Messungen, die den Abstand zwischen jedem der mehreren kontaktlosen Messmittel (158) und der Röhre repräsentieren, im Wesentlichen gleichzeitig ausgeführt werden können.

24. Vorrichtung nach Anspruch 23, wobei die mehreren kontaktlosen Messmittel (158) an dem Körper (102) so angebracht sind, dass im Gebrauch die Untersuchung im Wesentlichen gleichzeitig im Wesentlichen um den gesamten Umfang des Teils der Röhre ausgeführt werden kann.

25. Vorrichtung nach Anspruch 23 oder 24, wobei die kontaktlosen Messmittel (158) Mittel (161a, 161c) zum Messen des magnetischen Flusses an zwei Positionen relativ zu dem Teil umfassen.

26. Vorrichtung nach Anspruch 25, die ferner Mittel zum Erzeugen (210) eines differentiellen elektrischen Signals, das eine Differenz zwischen den Messungen an den zwei verschiedenen Positionen repräsentiert, umfasst.

27. Vorrichtung nach Anspruch 26, wobei die Mittel (210) zum Erzeugen eines differentiellen elektrischen Signals elektronische Verarbeitungsmittel (211) umfassen, um die ausgegebenen elektrischen Signale von den Messungen an den zwei verschiedenen Positionen durch Bestimmen des Verhältnisses der Differenz zwischen ihnen zu ihrer Summe zu verarbeiten, um das elektrische Ausgangssignal in Form einer Gleichspannung zu erhalten, das sich entsprechend dem Abstand zwischen den kontaktlosen Messmitteln (158) und der Röhre verändert.

28. Vorrichtung nach einem der Ansprüche 23 bis 27, wobei die kontaktlosen Messmittel (158) Induktionsmittel (161a, 161c) umfassen, um den magnetischen Fluss durch Induktion einer Spannung, die durch eine Änderung der Form des Teils hervorgerufen wird, zu messen.

29. Vorrichtung nach Anspruch 28, wobei die Induktionsmittel eine erste passive Spule (161a) umfassen.

30. Vorrichtung nach Anspruch 29, die ferner eine zweite passive Spule (161c), die von der ersten passiven Spule (161a) beabstandet ist, umfasst.

31. Vorrichtung nach Anspruch 30, wobei die erste und die zweite passive Spule sowie die aktive Spule im Wesentlichen koaxial in einem Gehäuse (158a) angeordnet sind, wobei die Anordnung derart ist, dass im Gebrauch die Achse der Spulen (161a, 161b, 161c) im Wesentlichen auf einer Linie auf einem Radius der Röhre liegen und die erste und die zweite passive Spule unterschiedliche Abstände von dem zu untersuchenden Teil der Röhre haben.

32. Vorrichtung nach Anspruch 28, 29, 30 oder 31, wobei die aktive Spule (161b), die erste passive Spule (161a) und die zweite passive Spule (161c) keinen Kern enthalten, derart, dass im Gebrauch der magnetische Fluss, der zwischen den Spulen eingekoppelt wird, vorwiegend durch die Position des Teils in Bezug auf diese Spulen beeinflusst wird.

33. Vorrichtung nach Anspruch 32, wobei die Spulen so positioniert sind, dass im Gebrauch entsprechende Spannungen, die in der ersten passiven Spule (161a) bzw. in der zweiten passiven Spule (161b) induziert werden, verschieden sind.

34. Vorrichtung nach einem der Ansprüche 23 bis 33, wobei die Treibermittel (200) ein zeitlich veränderliches Magnetfeld erzeugen können, mittels dessen die Form des Teils während der Untersuchung im Wesentlichen kontinuierlich überwacht werden kann.

35. Vorrichtung nach einem der Ansprüche 23 bis 34, wobei die mehreren kontaktlosen Messmittel (158) auf dem Umfang eines Kreises positioniert sind, wodurch im Wesentlichen der gesamte Umfang einer Röhre zu jedem Zeitpunkt untersucht werden kann.

36. Vorrichtung nach einem der Ansprüche 23 bis 35, wobei die Treibermittel (200) einen einzigen Frequenzgenerator (203) und mehrere Verstärker (205) zum Erzeugen einer jeweiligen Treiberspannung für jedes kontaktlose Messmittel (158) umfassen.

37. Vorrichtung nach einem der Ansprüche 23 bis 36, wobei der Einstellmechanismus eine Halterung (156b) umfasst, die einen Weg für die Bewegung des kontaktlosen Messmittels definiert, wobei die Halterung derart ist, dass eine Orientierung der kontaktlosen Messmittel während der Bewegung längs des Weges im Wesentlichen beibehalten wird.

38. Vorrichtung nach einem der Ansprüche 23 bis 37, wobei der Einstellmechanismus (156) ferner ein Element (156c) umfasst, das an dem Körper (102) beweglich angebracht ist, wobei die Anordnung derart ist, dass im Gebrauch die Bewegung des Elements (156c) die gleichzeitige radiale Bewegung und die Einstellung der mehreren kontaktlosen Messmittel (158) im Wesentlichen bewirkt.

39. Vorrichtung nach einem der Ansprüche 23 bis 38, wobei der Zentriermechanismus (110, 120) mehrere Rollen (126), die an dem Körper angebracht sind, und Vorbelastungsmittel (115) umfasst, wobei die Anordnung derart ist, dass im Gebrauch die Vorbelastungsmittel (115) die mehreren Rollen (126) zu der Oberfläche der zu untersuchenden Röhre drängen, wodurch der Körper (102) in einer Gleichgewichtsposition in der Röhre positioniert wird, in der die kontaktlosen Messmittel (158) in einem vorgegebenen Abstand von einer Oberfläche der Röhre gehalten werden.

40. Vorrichtung nach Anspruch 39, wobei die Gleichgewichtsposition zu der zu untersuchenden Röhre im Wesentlichen koaxial ist.

41. Vorrichtung nach Anspruch 39 oder 40, wobei die mehreren Rollen (126) an dem Körper (102) in der Weise angebracht sind, dass unter der Vorbelastung der Vorbelastungsmittel (125) die mehreren Rollen (126) im Wesentlichen auf einem gemeinsamen Umfang gehalten werden.

42. Vorrichtung nach Anspruch 41, wobei die mehreren Rollen (126) miteinander verbunden sind, so dass die Bewegung einer Rolle (126) zu einer Oberfläche hin oder von ihr weg eine entsprechende Bewegung der verbleibenden Rollen (126) bewirkt.

43. Vorrichtung nach einem der Ansprüche 39 bis 42, wobei jede Rolle (126) an einem ersten Arm (113) angebracht ist, der an dem Körper (102) schwenkbar angebracht ist, und die Vorbelastungsmittel (115) auf jeden Arm (113) eine Drehkraft ausüben, wobei die Drehkraft für jeden Arm (113) die gleiche Richtung hat.

44. Vorrichtung nach Anspruch 43, die ferner einen zweiten Arm (116') umfasst, der an einem ersten Arm einer Rolle (126) und an einem weiteren ersten Arm einer weiteren Rolle (126) angebracht ist, derart, dass alle ersten Arme (113) miteinander durch zweite Arme (116') verbunden sind, um eine einziehbare und ausdehnbare Struktur zu schaffen, wobei die Vorbelastungsmittel (115) eine Vorbelastungskraft erzeugen, um die Rollen (126) in einen Eingriff mit einer Röhre zu drängen, wodurch der Körper (102) in Bezug auf die Röhre im Wesentlichen zentriert wird.

45. Vorrichtung nach Anspruch 44, wobei der Körper (102) im Wesentlichen mittig in der Struktur angebracht ist, so dass die Vorrichtung (100) in eine zu untersuchende Röhre einführbar ist.

46. Vorrichtung nach einem der Ansprüche 39 bis 45, wobei der Zentriermechanismus einen ersten Zentrierer (110) und einen zweiten Zentrierer (120), die von dem Körper (102) axial beabstandet sind, umfasst.

47. Vorrichtung nach Anspruch 46, wobei die Vorbelastungsmittel (115) auf den ersten und auf den zweiten Zentrierer eine Vorbelastungskraft in der gleichen Drehrichtung ausüben.

48. Vorrichtung nach einem der Ansprüche 23 bis 47, die ferner Motormittel (130) zum Antreiben der Vorrichtung (100) relativ zu der Röhre umfasst.

49. Vorrichtung nach einem der Ansprüche 23 bis 48, die ferner Mittel (132) umfasst, um im Gebrauch eine longitudinale Position einer durch die Vorrichtung untersuchten Röhre zu überwachen.

50. Vorrichtung nach einem der Ansprüche 23 bis 51, die ferner Mittel (171) umfasst, um eine Drehorientierung der Vorrichtung in Bezug auf eine untersuchte Röhre zu überwachen.

51. Vorrichtung nach Anspruch 50, wobei die Mittel (171) zum Überwachen einer Drehorientierung ein an einer Welle exzentrisch angebrachtes Gewicht, das durch die Schwerkraft frei hängt, und Mittel, die an der Vorrichtung (100) befestigt sind, um die Drehorientierung des Gewichts zu überwachen, umfassen, wobei die Anordnung derart ist, dass im Gebrauch die Drehung der Vorrichtung (100) eine Bewegung des Gewichts in Bezug auf die Vorrichtung zur Folge hat.

52. Vorrichtung nach Anspruch 51, wobei die an der Vorrichtung befestigten Mittel ein Potentiometer umfassen und das Gewicht an der Welle so befestigt ist, dass die Drehung der Vorrichtung eine entsprechende Drehung der Welle unter der Wirkung des Gewichts zur Folge hat, wodurch eine Ausgangsspannung über dem Potentiometer zu einer Änderung entsprechend der Drehorientierung der Vorrichtung veranlasst wird.

53. Verfahren zum Kalibrieren der Vorrichtung nach einem der Ansprüche 23 bis 52, wobei das Verfahren die folgenden Schritte umfasst:
(a) Anordnen der Vorrichtung benachbart zu einem Abschnitt einer Röhre, von dem bekannt ist, dass er im Querschnitt kreisförmig ist und eine im Wesentlichen gleichmäßige Wanddicke besitzt;
(b) Einstellen der mehreren kontaktlosen Messmittel auf einen ersten bekannten Abstand von einer Oberfläche des Abschnitts;
(c) Nehmen der Messung für jedes der mehreren kontaktlosen Messmittel; und
(d) Wiederholen der Schritte (a) bis (c) bei wenigstens einem anderen bekannten Abstand von dem Rohr, der von dem ersten bekannten Abstand verschieden ist;
wodurch eine nichtlineare Veränderung des Ausgangs von den kontaktlosen Messmitteln zwischen den bekannten Abständen elektronisch geschätzt werden kann, wodurch Ausgänge, die Messungen repräsentieren, die zwischen den bekannten Abständen genommen werden, elektronisch interpretiert und einem Wert auf einer linearen Skala, der einem Abstand entspricht, zugewiesen werden können.

54. Verfahren nach Anspruch 53, das ferner den Schritt des elektronischen Anpassens der Messungen des bekannten Abstands an eine 1/r-Kurve umfasst, wobei r der Abstand von einem Punkt der kontaktlosen Mcssmittel zu einer Oberfläche der Röhre ist, wodurch erwartete Ausgänge von den kontaktlosen Messmitteln in Abständen, die von den bekannten Abständen verschieden sind, geschätzt werden können.

55. Verfahren nach Anspruch 54, das ferner die Schritte des elektronischen Zuordnens der geschätzten Ausgänge zu linearisierten Ausgangswerten, die einer im Wesentlichen linearen Beziehung zu dem Abstand von der Röhre folgen, des Erzeugens einer Nachschlagtabelle für das oder jedes kontaktlose Messmittel, die die Ausgangswerte mit den linearisierten Werten in Beziehung setzt, und des Speicherns der Nachschlagtabelle in einem computerlesbaren Speicher umfasst.

## Revendications

1. Procédé sans contact d'inspection d'un élément tubulaire concernant des défauts, ledit élément tubulaire comportant un materiau électriquement et/ou magnétiquement conducteur, lequel procédé comprend les étapes consistant à :
(1) maintenir une pluralité de moyens de mesure sans contact (158) dans un bäti de référence essentiellement fixe, essentiellement indépendant dudit element tubulaire;
(2) prendre une mesure représentative d'une distance entre chaque moyen de ladite pluralité de moyens de mesure sans contact (158) et une surface d'une partie d'un élément tubulaire, chaque mesure étant prise en :
a) produisant un champ magnétique adjacent ä la partie de l'élément tubulaire à inspecter, le champ magnétique passant vers, à travers et hors de ladite partie ; et
b) prenant une mesure représentative de la quantité de flux magnétique dudit champ magnétique adjacent ä ladite partie ;
(3) générant un signal électrique de sortie représentatif de ladite mesure, un changement dans la configuration d'une partie de l'élément tubulaire se manifestant par une variation correspondante de la quantité de flux magnétique couplée ä cette partie, de façon que ledit signal électrique de sortie soit entraîné à varier en fonction de la configuration de l'élément tubulaire ; et
(4) en répétant l'étape 2) au niveau de parties différentes de l'élément tubulaire, des variations dans les mesures de distance étant representatives d'une modification de la forme de ladite surface, de sorte que la localisation des défauts est facilitée ;
**caractérisé par** les étapes consistant à effectuer un réglage radial simultané de ladite pluralité de moyens de mesure sans contact (158) à une distance prédéterminée de la surface dudit element tubulaire avant l'inspection, ä générer ledit champ maqnetique en utilisant une pluralité de bobines actives (161b) et en fournissant une tension de commande essentiellement synchrone à chaque bobine active (161b) de sorte qu'une interférence entre lesdits moyens de mesure sans contact (158) est empêchée de telle façon que chaque moyen de ladite pluralité de moyens de mesure sans contact (158) puisse exécuter l'étape 2) de façon essentiellement simultanée, et en ce que l'étape b) est exécutée dans une zone dans laquelle ledit champ magnétique possède une composante dominante de direction essentiellement perpendiculaire à une tangente à ladite partie.

2. Procédé comme revendiqué selon la revendication 1, comprenant, en outre, l'étape consistant à prendre une mesure au niveau d'une pluralité de parties de l'élément tubulaire de façon essentiellement simultanée, ladite pluralité de parties se trouvant autour de la circonférence de l'élément tubulaire.

3. Procédé comme revendiqué selon la revendication 2, comprenant, de plus, l'étape consistant à déplacer lesdits moyens de mesure sans contact (158) le long de l'élément tubulaire de façon ä inspecter l'élément tubulaire le long d'une pluralité de parcours essentiellement linéaires sur la surface de l'élément tubulaire.

4. Procédé comme revendiqué selon la revendication 1, 2 ou 3, comportant encore l'étape consistant à mesurer ledit flux magnétique par induction d'une tension provoquée par une modification de la configuration de ladite partie.

5. Procédé comme revendiqué selon la revendication 1 , 2, 3 ou 4, dans lequel ledit signal électrique de sortie est indicateur de la distance comprise entre une surface de ladite partie et un point de référence situé sur lesdits moyens de mesure sans contact (158).

6. Procédé comme revendiqué selon l'une quelconque des revendications précédentes, comprenant de plus l'étape consistant à générer un champ magnétique variable dans le temps au moyen duquel la configuration de ladite partie peut être contrôlée de façon essentiellement continue pendant l'inspection.

7. Procédé comme revendiqué selon la revendication 6, comprenant, de plus, l'étape consistant à utiliser ledit champ magnétique variable dans le temps pour induire une tension dans les moyens de mesure sans contact (158)adjacents à ladite partie, l'amplitude de ladite tension induite variant selon la configuration dudit élément tubulaire.

8. Procédé comme revendiqué selon l'une quelconque des revendications précédentes comprenant, de plus, l'étape consistant à prendre au moins deux mesures représentatives de la quantité de flux magnétique dudit champ magnétique adjacent ä ladite partie, dans lequel lesdites au moins deux mesures sont prises dans des positions dans lesquelles le flux magnétique est different.

9. Procédé comme revendiqué selon la revendication 8, dans lequel lesdites au moins deux mesures sont prises ä des distances différentes de ladite partie.

10. Procédé comme revendiqué selon la revendication 8 ou 9, comprenant, de plus, l'étape consistant à générer un signal électrique différentiel représentatif de la difference entre lesdites première et seconde mesures.

11. Procédé comme revendiqué selon l'une quelconque des revendications précédentes, comprenant, de plus, l'étape consistant à prendre ladite mesure du flux magnétique avec une première bobine passive (161a), le procédé étant tel que la partie dudit élément tubulaire adjacente à ladite bobine agit pour coupler le flux magnétique entre ladite bobine active (161b) et ladite première bobine passive (161a), un changement de configuration de ladite partie aboutissant à un changement de l'inductance mutuelle entre les bobines.

12. Procédé comme revendiqué selon la revendication 11 comprenant, de plus, les étapes consistant à prendre ladite mesure avec la première bobine passive (161a) et une seconde bobine passive (161h), les tensions respectives induites dans les première et seconde bobines passives étant différentes, et à générer un signal électrique de sortie representatif de la différence entre lesdites tensions.

13. Procédé comme revendiqué selon la revendication 12 comprenant, de plus, l'étape consistant de traitement avec des moyens de traitement électroniques (160) lesdites tensions respectives pour déterminer le rapport de la difference entre elles divisé par leur somme afin d'obtenir ledit signal électrique de sortie sous la forme d'une tension CC qui varie selon ladite distance.

14. Procédé comme revendiqué selon la revendication 11, 12 ou 13, comprenant, de plus, l'étape consistant à prendre une pluralité de mesures de parties différentes de l'élément tubulaire de façon essentiellement simultanée, chaque mesure étant prise avec un moyen de mesure sans contact (158) qui comporte une bobine active (161b) et (a) une première bobine passive (161a) ou (b) une première (161a) et une seconde (161b) bobines passives.

15. Procédé comme revendiqué selon l'une quelconque des revendications précédentes, dans lequel un seul générateur de fréquences (200) génère ladite tension de commande synchrone et, à partir de celle-ci, une tension de commande séparée est générée pour chaque moyen de mesure sans contact (158).

16. Procédé comme revendiqué selon l'une quelconque des revendications précédentes, dans lequel ladite distance se situe approximativement entre 6 mm et 25 mm.

17. Procédé comme revendiqué selon la revendication 16, dans lequel ladite distance est de 12,7 mm environ.

18. Procédé comme revendiqué selon l'une quelconque des revendications précédentes comprenant, de plus, l'étape consistant à enregistrer électroniquement ledit signal électrique de sortie pour chaque moyen de mesure sans contact (158) afin de fournir une indication de la présence de défauts quelconques dans la surface de l'élément tubulaire.

19. Procédé comme revendiqué selon l'une quelconque des revendications précédentes comprenant, de plus, l'étape consistant à inspecter de façon progressive la surface intérieure et/ou extérieure dudit élément tubulaire.

20. Procédé comme revendiqué selon la revendication 19 comprenant, de plus, l'étape consistant à contrôler et à enregistrer électroniquement la position lonqitudinale desdits moyens de mesure sans contact (158) le long de l'élément tubulaire et à associer chaque mesure à une position longitudinale.

21. Procédé comme revendiqué selon la revendication 19 ou 20 comprenant, de plus, l'étape consistant à contrôler et à enregistrer électroniquement la position en rotation desdits moyens de mesure sans contact (158) le long de l'élément tubulaire et à associer chaque mesure à une position de rotation.

22. Procédé comme revendiqué selon l'une quelconque des revendications précédentes, dans lequel lesdits moyens de mesure sans contact (158) sont fixés de façon libérable sur un corps (102) dans ledit bäti de reference essentiellement indépendant, le procédé comprenant, en outre, l'étape consistant à centrer essentiellement ledit corps (102) dans l'élément tubulaire.

23. Dispositif (100) permettant d'inspecter un élément tubulaire comportant un matériau électriquement et/ou magnétiquement conducteur, lequel dispositif (100) comprend un corps (102) ayant une pluralité de moyens de mesure sans contact (158) fixés sur lui dans un bâti de référence essentiellement fixe par rapport au corps (102), un mécanisme de ccntrage (110, 120) pour maintenir le dispositif (100) dans un bâti de référence essentiellement fixe essentiellement indépendant de l'élément tubulaire inspecté, l'agencement étant de telle sorte que, en fonctionnement, chaque moyen de ladite pluralité de moyens de mesure sans contact (158) peut prendre une mesure representative d'une distance entre le moyens de mesure sans contact (158) et une surface respective de la partie de l'élément tubulaire, une modification de la configuration de l'élément tubulaire correspondant à un déplacement de ladite partie dans le bâti de référence, et génère un signal de sortie électrique qui est représentatif de ce déplacement, dans lequel ladite mesure de distance est obtenue en utilisant un champ magnétique qui passe à l'intérieur de, traverse et sort de, ladite partie et en prendant une mesure représentative de la quantité de flux magnétique dudit champ magnétique adjacent à ladite partie, une modification de la configuration d'une partie de l'élément tubulaire se manifestant par une modification correspondante de la quantite de flux magnétique couplée à cette partie, de sorte que ledit signal de sortie électrique est entraîné à varier en fonction de la configuration de l'élément tubulaire pour faciliter une localisation des défauts,
**caractérisé en ce que** ledit dispositif (100) comporte un mécanisme de reglage (156) pour effectuer un réglage radial simultané de ladite pluralité de moyens de mesure sans contact (158) ä une distance prédéterminée de la surface dudit élément tubulaire avant l'inspection, et **en ce que** chaque moyen de ladite pluralité de moyens de mesure sans contact (158) comporte une bobine active (161b) pour générer ledit champ magnétique avec une composante de direction dominante essentiellement perpendiculaire ä une tangente à ladite partie, et en commandant des moyens (200) permettant de fournir une tension de commande essentiellement synchrone ä chaque moyen de ladite pluralité de moyens de mesure sans contact (158) de sorte qu'une interférence entre les moyens de mesure sans contact (158) est empêchée de telle façon que des mesures representatives de la distance entre chaque moyen de ladite pluralité de moyens de mesure sans contact (158) et ledit element tubulaire peuvent être effectuées de façon essentiellemcnt simultanées.

24. Dispositif comme revendiqué selon la revendication 23, dans lequel ladite pluralité de moyens de mesure sans contact (158) est montée sur ledit corps (102) de telle sorte que, en fonctionnement, une inspection puisse être réalisée de façon essentiellement simultanée autour essentiellement de toute la circonférence d'une partie de l'élément tubulaire.

25. Dispositif comme revendiqué selon la revendication 23 ou 24, dans lequel lesdits moyens de mesure sans contact (158) comprennent des moyens pour mesurer (161a, 161c) ledit flux magnétique dans deux positions par rapport ä ladite partie.

26. Dispositif comme revendiqué selon la revendication 25 comprenant, de plus, des moyens pour générer (210) un signal électrique différentiel représentatif d'une différence entre les mesures effectuées dans deux positions différentes.

27. Dispositif comme revendiqué selon la revendication 26, dans lequel lesdits moyens permettant de générer (210) un signal électrique différentiel comportent des moyens de traitement électroniques (211) pour traiter les signaux de sortie électriques ä partir de mesures effectuées dans lesdites deux différentes positions en déterminant le rapport de la différence entre elles divisé par leur somme pour obtenir ledit signal de sortie électrique sous la forme d'une tension CC qui varie en fonction de la distance entre les moyens de mesure sans contact (158) et ledit élément tubulaire.

28. Dispositif comme revendiqué selon l'une quelconque des revendications 23 à 27, dans lequel lesdits moyens de mesure sans contact (158) comportent des moyens d'induction (161a, 161c) pour une mesure dudit flux magnétique par induction d'une tension provoquée par un changement dans la configuration de ladite partie.

29. Dispositif comme revendiqué selon la revendication 28, dans lequel lesdits moyens d'induction comportent un première bobine passive (161a).

30. DisposiLif comme revendiqué selon la revendication 29 comprenant, de plus, une seconde bobine passive (161c) distante de ladite première bobine passive (161a).

31. Dispositif comme revendiqué selon la revendication 30, dans lequel lesdites première et seconde bobines passives et ladite bobine active sont disposées de façon essentiellement coaxiale dans un logement (158a), l'agencement étant réalisé de telle sorte que, en fonctionnement, l'axe des bobines (161a, 161b, 161c) repose essentiellement sur une ligne sur un rayon de l'élément tubulaire et que les première et seconde bobines passives se trouvent à des distances différentes de la partie de l'élément tubulaire qui est inspecté.

32. Dispositif comme revendiqué selon la revendication 28, 29, 30 ou 31, dans lequel ladite bobine active (161b), la première bobine passive (161a) et la seconde bobine passive (161c) ne comportent aucun noyau de telle sorte que, en fonctionnement un flux magnetique de couplage entre les bobines est affecté, de façon prédominante, par la position de ladite partie par rapport aux dites bobines.

33. Dispositif comme revendiqué selon la revendication 32, dans lequel lesdites bobines sont positionnées de telle sorte que, en fonctionnement, des tension respectives induites dans lesdites première (161a) et seconde (161b) bobines passives sont différentes.

34. Dispositif comme revendiqué selon l'une quelconque des revendications 23 à 33, dans lequel lesdits moyens de commande (200) peuvent générer un champ magnétique variable dans le temps au moyen duquel la configuration de ladite partie peut être contrôlée de façon essentiellement continue pendant une inspection.

35. Dispositif comme revendiqué selon l'une quelconque des revendications 23 à 34, dans lequel ladite pluralité de moyens de mesure sans contact (158) est positionnée sur la circonférence d'un cercle, de sorte que, essentiellement, toute la circonférence d'un élément tubulaire peut être inspectée ä chaque instant.

36. Dispositif comme revendiqué selon l'une quelconque des revendications 23 ä 35, dans lequel lesdits moyens de commande (200) comportent un seul générateur de fréquences (203) et une pluralité d'amplificateurs (205) pour générer une tension de commande respective pour chaque moyen de mesure sans contact (158).

37. Dispositif comme revendiqué selon l'une quelconque des revendications 23 à 36, dans lequel ledit mécanisme de réglage comporte une monture (156b) qui définit un parcours pour le déplacement desdits moyens de mesure sans contact, ladite monture se présentant de telle sorte qu'une orientation desdits moyens de mesure sans contact est essentiellement préservée pendant un déplacement le long dudit parcours.

38. Dispositif comme revendiqué selon l'une quelconque des revendications 23 à 37, dans lequel ledit mécanisme de réglage (156) comporte, de plus, un élément (156c) monté de façon mobile sur ledit corps (102), l'agencement étant tel que, en fonctionnement, un déplacement dudit element (156c) effectue essentiellement ledit mouvement radial simultané et un réglage de ladite pluralité de moyens de mesure sans contact (158).

39. Dispositif comme revendiqué selon l'une quelconque des revendications 23 à 38, dans lequel ledit mécanisme de centrage (110, 120) comprend une pluralité de cylindres (126) montés sur ledit corps et des moyens de rappel (115), l'agencement etant tel que, en fonctionnement, lesdits moyens de rappel (115) poussent ladite pluralité de cylindres (126) vers la surface d'un élément tubulaire à inspecter de sorte que ledit corps (102) est positionné dans une position d'équilibre dans l'élément tubulaire dans lequel les moyens de mesure sans contact (158) sont maintenus à une distance prédéterminée d'une surface de l'élément tubulaire.

40. Dispositif comme revendiqué selon la revendication 39, dans lequel ladite position d'équilibre est essentiellement co-axiale avec l'élément tubulaire ä inspecter.

41. Dispositif comme revendiqué selon la revendication 39 ou 40, dans lequel ladite pluralité de cylindres (126) est montée sur ledit corps (102) de telle sorte que, sous le rappel desdits elements de rappel (115), la pluralité des cylindres (126) est maintenue essentiellement sur une circonférence commune.

42. Dispositif comme revendiqué selon la revendication 41, dans lequel ladite pluralité de cylindres (126) sont liés entre eux de telle façon qu'un déplacement d'un cylindre (126) vers, ou à distance de, ladite surface ait pour effet un déplacement correspondant des cylindres restants (126).

43. Dispositif comme revendiqué selon l'une quelconque des revendications 39 à 42, dans lequel chaque cylindre (126) est monté sur un premier bras (113) qui est monté ä pivotement sur ledit corps (102), et lesdits moyens de rappel (115) appliquent une force de rotation à chaque bras (113), la force de rotation étant dans le même sens pour chaque bras (113).

44. Dispositif comme revendiqué selon la revendication 43, comprenant, de plus, un second bras (116') monté sur un premier bras d'un cylindre (126) et un autre premier bras de l'autre cylindre (126) de telle sorte que tous les premiers bras (113) sont liés entre eux par les seconds bras (116') afin de fournir une structure déformable et extensible, lesdits moyens de rappel (115) fournissant une force de rappel pour pousser lesdits cylindres (126) en engagement avec un élément tubulaire, de sorte que ledit corps (102) se trouve essentiellement centré par rapport audit element tubulaire.

45. Dispositif comme revendiqué selon la revendication 44, dans lequel ledit corps (102) est monté de façon essentiellement centrale à l'intérieur de ladite structure de telle sorte que le dispositif (100) peut être inséré dans un élément tubulaire à inspecter.

46. Dispositif comme revendiqué selon l'une quelconque des revendications 39 à 45, dans lequel ledit mécanisme de centrage comporte des premiers (110) et seconds (120) éléments de positionnement au centre distants axialement dudit corps (102).

47. Dispositif comme revendiqué selon la revendication 46, dans lequel lesdits moyens de rappel (115) appliquent une force de rappel dans le même sens de rotation sur lesdits premiers et seconds éléments de positionnement au centre.

48. Dispositif comme revendiqué selon l'une quelconque des revendications 23 à 47, comprenant, de plus, des moyens de moteur (130) pour entrainer le dispositif (100)par rapport à l'élément tubulaire.

49. Dispositif comme revendiqué selon l'une quelconque des revendications 23 à 48, comportant, de plus, des moyens (132) pour contrôler, en fonctionnement, la position longitudinale d'un élément tubulaire en cours d'inspection par le dispositif.

50. Dispositif comme revendiqué selon l'une quelconque des revendications 23 à 51 comprenant, de plus, des moyens (171) servant ä contrôler une orientation de la rotation du dispositif par rapport ä un élément tubulaire en cours d'inspection.

51. Dispositif comme revendiqué selon la revendication 50, dans lequel lesdits moyens (171) destines ä contrôler une orientation de la rotation comportent un poids monté de façon excentrée sur un arbre, ledit poids étant libre de pendre sous l'effet de la gravité, et des moyens fixés sur ledit dispositif (100) pour contrôler l'orientation de la rotation dudit poids, l'agencement étant realisé de telle sorte que, en fonctionnement, une rotation dudit dispositif (100) entraîne un déplacement dudit poids par rapport audit dispositif.

52. Dispositif comme revendiqué selon la revendication 51, dans lequel lesdits moyens fixes sur le dispositif comprennent un potentiomètre et dans lequel ledit poids est fixé audit arbre de telle façon qu'une rotation dudit dispositif entraine une rotation correspondante dudit arbre sous l'action dudit poids, de sorte qu'une tension de sortie à travers le potentiomètre est amenée ä varier cn fonction de l'orientation de la rotation du dispositif.

53. Procédé d'étalonnage d'un dispositif selon l'une quelconque des revendications 23 ä 52, lequel procédé comprend les étapes consistant à :
a) placer le dispositif de façon adjacente à une partie d'un élément tubulaire qui est connu pour être essentiellement circulaire en section transversale et ayant une épaisseur de paroi essentiellement uniforme ;
b) régler ladite pluralité de moyens de mesure sans contact à une première distance connue d'une surface de ladite partie;
c) prendre ladite mesure correspondant à chaque moyen de ladite pluralité de moyens de mesure sans contact ; et
d) répéter les étapes a) à c) à au moins une autre distance connue dudit conduit différente de ladite première distance connue ;
de sorte qu'une variation non linéaire en sortie à partir des moyens de mesure sans contact entre les distances connues peut être estimée de façon électronique, de sorte que des sorties représentatives des mesures prises entre lesdites distances connues puissent être interprétées électroniquement et qu'on puisse leur attribuer une valeur sur une échelle linéaire correspondant à une distance.

54. Procédé comme revendiqué selon la revendication 53 comprenant, en outre, l'étape consistant à ajuster électroniquement lesdites mesures de distance connue à une courbe en l/r, où r représente la distance d'un point des moyens de mesure sans contact à une surface de l'élément tubulaire, de sorte que des sorties attendues à partir des moyens de mesure sans contact ä des distances autres que lesdites distances connues peuvent être estimées.

55. Procédé comme revendiqué selon la revendication 54 comprenant, de plus, les étapes consistant à associer électroniquement lesdites sorties estimées à des valeurs de sortie linéarisées qui suivent une relation essentiellement linéaire avec une distance de l'élément tubulaire, à générer une table de consultation pour les moyens de mesure sans contact, ou pour chaque moyen de mesure sans contact, qui rapporte les valeurs de sortie aux valeurs linéarisées, et à stocker ladite table de consultation dans une mémoire d'ordinateur à accès en lecture.
